# EUROPÄISCHE PATENTANMELDUNG

(11) **EP 4 371 907 A1**
(43) Veröffentlichungstag der Anmeldung: **22.05.2024**
(21) Anmeldenummer: 23209952.3
(22) Anmeldetag: 15.11.2023
(51) Int. Cl.: B65G 1/04, B65G 1/06, B65G 1/137

(54) **SHUTTLE-SYSTEM UND VERFAHREN ZUM BETREIBEN EINES SHUTTLE-SYSTEMS**

(30) Priorität: 15.11.2022 DE 102022130207
(71) Anmelder: Gebhardt Fördertechnik GmbH, D-74889 Sinsheim (DE)
(72) Erfinder: Gebhardt, Marco, 74889 Sinsheim (DE); BRANNER, Fabian, 79189 Bad Krozingen (DE); NICOLAI, Volker, 76307 Karlsbad (DE)
(74) Vertreter: Patentanwälte und Rechtsanwalt Weiß, Arat & Partner mbB

(57) **Zusammenfassung**

Bei einem Verfahren zum Betreiben eines Shuttle-Systems soll das zumindest eine Shuttle (9) einen einzulagernden Ladungsträger von einer Übergabestation übernehmen und einen auszulagernden Ladungsträger an eine Übergabestation übergeben.

## Beschreibung

### Technisches Gebiet

Die Erfindung betrifft ein Shuttle-System und ein Verfahren zum Betreiben eines Shuttle-Systems gemäss den unabhängigen Ansprüchen.

### Stand der Technik

Shuttle-Systeme sind aus dem Stand der Technik bekannt.

### Aufgabe der Erfindung

Die Aufgabe der vorliegenden Erfindung ist es, die Nachteile aus dem Stand der Technik zu überwinden.

### Lösung der Aufgabe

Zur Lösung der Aufgabe führen die Gegenstände der unabhängigen Ansprüche. Vorteilhafte Ausgestaltungen sind in den abhängigen Ansprüchen beschrieben.

Ein Shuttle-System gemäss der vorliegenden Erfindung umfasst einen Regalbau mit einer Ein- und Auslager-Ebene und zumindest einer Lagerebene. Vorzugsweise umfasst das Shuttle-System mehrere Lagerebenen und genau eine Ein- und Auslager-Ebene. Es kann jedoch auch an Ausführungsformen mit zwei oder mehr Ein- und Auslager-Ebenen gedacht sein. Vorzugsweise befinden sich in der Ein- und Auslager-Ebene Lagerplätze für Ladungsträger.

Das Shuttle-System umfasst ferner zumindest ein in den Ebenen des Regalbaus verkehrendes Shuttle.

Der Regalbau umfasst eine Regalfront. Die Regalfront ist vorzugsweise eine Seite des Regalbaus, im Grundriss betrachtet also eine Kante des Regalbaus. Vorzugsweise ist der Regalbau im Wesentlichen rechteckig ausgebildet, so dass die Regalfront eine der vier Kanten des rechteckigen Grundrisses des Regalbaus darstellt.

Der Regalbau umfasst zumindest einen Senkrechtförderer. Vorzugsweise umfasst der Regalbau mehrere Senkrechtförderer.

Der Regalbau umfasst entlang der Regalfront zumindest zwei Übergabestationen zum Ein- und Auslagern eines Ladungsträgers aus dem Regalbau. Vorzugsweise sind diese Übergabestationen lediglich in der Ein - und Auslager-Ebene angeordnet. Vorzugsweise wird unter einem Auslagern eines Ladungsträgers ein Prozess verstanden, bei welchem ein Ladungsträger von seinem Lagerplatz im Regalbau an ein Fördermittel ausserhalb des Regalbaus übergeben wird. Ein Einlagern ist der umgekehrte Prozess. Üblicherweise umfassen sowohl das Einlagern als auch das Auslagern mehrere Teil-Prozesse. Wenn hier beispielsweise davon die Rede ist, dass die Übergabestation dem Ein- und Auslagern dient, so muss die Übergabestation also nicht den gesamten Ein- und Auslager-Prozess bewerkstelligen, sondern nur an einem Teil-Prozess beteiligt sein. Vorzugsweise werden als Fördermittel ausserhalb des Regalbaus Flurförderzeuge, insbesondere Fahrerlose Transport-Fahrzeuge (FTF) eingesetzt, welche Ladungsträger an die Übergabestationen übergeben und von diesen übernehmen. Dies wird weiter unten ausführlich beschrieben. Der Begriff "FTF" umfasst hierbei auch sogenannte "autonomous mobile robots (AMR)", die teilweise auch als "autonome FTF" bezeichnet werden.

Dem Senkrechtförderer sind zumindest zwei Übergabestationen zugeordnet. Umfasst der Regalbau mehrere Senkrechtförderer, so können jedem Senkrechtförderer zumindest zwei Übergabestationen zugeordnet sein. Aus beispielsweise baulichen Gründen, wenn ein Senkrechtförderer beispielsweise nahe eines Regalstehers angeordnet ist, kann es wegen des Platzbedarfs des Regalstehers oder aus anderen Gründen vorkommen, dass einzelnen Senkrechtförderern nur eine Übergabestation zugeordnet ist. Sind mehrere Senkrechtförderer vorhanden, so sind dennoch vorzugsweise einem Senkrechtförderer, bevorzugter einem Teil dieser Senkrechtförderer, besonders bevorzugt einer Mehrzahl dieser Senkrechtförderer zumindest zwei Übergabestationen zugeordnet.

Eine solche dem Senkrechtförderer "zugeordnete" Übergabestation befindet sich zumindest in räumlicher Nähe des Senkrechtförderers. Sie muss nicht zwingend unmittelbar an den Senkrechtförderer angrenzen. Vorzugsweise sind die einem bestimmten Senkrechtförderer zugeordneten Übergabestationen näher an dem betreffenden Senkrechtförderer angeordnet, als an den anderen Senkrechtförderern des Shuttle-Systems. Für zumindest einige der Übergabestationen kann diese Zuordnung, was nachstehend noch näher beschrieben wird, jedoch bedarfsabhängig variieren. Die Zuordnung ist also nicht in jedem Ausführungsbeispiel unveränderlich festgelegt. Vorzugsweise sind jedoch jedem Senkrechtförderer zumindest zwei Übergabestationen dergestalt zugeordnet, dass sie nur oder jedenfalls vorzugsweise dazu dienen, Ladungsträger zu handhaben, welche zuvor von diesem Senkrechtförderer befördert wurden oder anschliessend von diesem Senkrechtförderer befördert werden.

Die Übergabestationen sind eingerichtet, eine Übergabe eines Ladungsträgers von einem in der Ein- und Auslager-Ebene verkehrenden Shuttle oder von einem parallel zur Regalfront in der Ein- und Auslager-Ebene verkehrenden Quer-Verfahr-Wagen an ein entlang der Regalfront verkehrendes Flurförderzeug und umgekehrt zu erlauben. Die Übergabestationen befinden sich vorzugsweise unmittelbar an oder in der Regalfront. Das Shuttle-System kann derartige Flurförderzeuge, insbesondere FTF, umfassen. Es kann jedoch auch daran gedacht sein, dass der Ladungsträger auf andere Weise als durch ein Flurförderzeug von einer wie vorbeschrieben eingerichteten Übergabestation zu übernehmen oder an diese zu übergeben.

Dem zumindest einen Senkrechtförderer sind zumindest zwei Übergabeplätze zugeordnet.

Im Rahmen der vorliegenden Erfindung können die Übergabestationen und die Übergabeplätze zumindest ähnlich aufgebaut sein, insbesondere Abstell-Schienen zum Abstellen eines Ladungsträgers, aber ansonsten keine Fördermittel oder dergleichen aktive Elemente umfassen. Im Rahmen der vorliegenden Erfindung sind Übergabestationen vorzugsweise die wie bereits beschrieben an oder in der Regalfront angeordneten Übergabe-Stellen, welche die Übergabe eines Ladungsträgers von einem ausserhalb des Regalbaus verkehrenden Flurförderzeug an ein in dem Regalbau verkehrendes Shuttle oder an einen dort verkehrenden Quer-Verfahr-Wagen und umgekehrt erlauben. Demgegenüber sind Übergabeplätze vorzugsweise Übergabe-Stellen, welche unmittelbar an den Senkrechtförderer angrenzen und die Übergabe eines Ladungsträgers von dem Senkrechtförderer an ein im Regalbau verkehrendes Shuttle und umgekehrt erlauben.

Sind mehrere Senkrechtförderer vorhanden, so sind vorzugsweise jedem Senkrechtförderer zumindest zwei Übergabeplätze zugeordnet. Wie bereits erwähnt sind jedem Senkrechtförderer vorzugsweise genau zwei Übergabeplätze zugeordnet, welche derart neben dem Senkrechtförderer angeordnet sind, dass sie unmittelbar an ihn angrenzen. Vorzugsweise sind die Übergabeplätze derart eingerichtet, dass ein Lastaufnahmemittel des Senkrechtförderers, beispielsweise eine Teleskopgabel oder dergleichen, einen Ladungsträger auf den Übergabeplätzen abstellen oder von dort aufnahmen kann. Vorzugsweise sind die Übergabestationen weiter von dem Senkrechtförderer entfernt als die Übergabeplätze.

Die Übergabeplätze sind eingerichtet, eine Übergabe eines Ladungsträgers von dem Senkrechtförderer an ein in der Ein- und Auslager-Ebene verkehrendes Shuttle und umgekehrt oder an den Quer-Verfahr-Wagen und umgekehrt zu erlauben.

Dem zumindest einen Senkrechtförderer können zumindest zwei Übergabestationen derart zugeordnet sein, dass sich entlang der Regalfront vor und nach dem Senkrechtförderer jeweils zumindest eine Übergabestation befindet. Sind mehrere Senkrechtförderer vorhanden, so gilt dies vorzugsweise für sämtliche Senkrechtförderer. Hierbei bezieht sich die räumliche Angabe "vor und nach dem Senkrechtförderer" vorzugsweise auf eine Längsrichtung der Regalfront. Vorzugsweise sind zumindest einem Teil der Senkrechtförderer, noch bevorzugter jedem Senkrechtförderer mehr als zwei Übergabestationen zugeordnet, beispielsweise vier, fünf oder sechs Übergabestationen.

Dem zumindest einen Senkrechtförderer können zumindest zwei Übergabeplätze derart zugeordnet sein, dass sich entlang der Regalfront vor und nach dem Senkrechtförderer jeweils zumindest ein Übergabeplatz befindet. Sind mehrere Senkrechtförderer vorhanden, so gilt dies vorzugsweise für sämtliche Senkrechtförderer. Hierbei bezieht sich die räumliche Angabe "vor und nach dem Senkrechtförderer" vorzugsweise auf eine Längsrichtung der Regalfront. Vorzugsweise sind jedem Senkrechtförderer genau zwei Übergabeplätze zugeordnet, wobei sich ein Übergabeplatz vor dem Senkrechtförderer und ein Übergabeplatz nach dem Senkrechtförderer befindet, wie vorstehend bereits beschrieben.

Durch die vorbeschriebene Anordnung von Übergabestationen und Übergabeplätzen kann sichergestellt sein, dass auch für den Fall, dass dem Senkrechtförderer zwei Shuttles zugeordnet sind, deren Fahrwege sich nicht oder jedenfalls selten kreuzen, was ein Abbremsen eines Shuttles und somit die Verlangsamung des Ladungsträger-Transfers zur Folge hätte. Bezogen auf die Längsrichtung der Regalfront kann im vorbeschriebenen Fall ein für das Einlagern zuständiges Shuttle vorzugsweise oder ausschliesslich vor dem Senkrechtförderer zwischen den vor dem Senkrechtförderer befindlichen Übergabestationen und Übergabeplätzen verkehren, während ein für das Auslagern zuständiges Shuttle vorzugsweise oder ausschliesslich nach dem Senkrechtförderer zwischen den nach dem Senkrechtförderer befindlichen Übergabestationen und Übergabeplätzen verkehrt.

Dem Senkrechtförderer kann zumindest ein Shuttle zugeordnet sein, welches eingerichtet ist, Ladungsträger von den Übergabestationen zu den Übergabeplätzen und zurück zu transportieren. Hierbei meint "zugeordnet sein" vorzugsweise, dass zumindest ein, vorzugsweise genau ein oder genau zwei Shuttles vorhanden sind, welche überwiegend oder ausschliesslich dazu eingesetzt werden, Ladungsträger von den Übergabestationen zu den Übergabeplätzen und zurück zu transportieren. In alternativen Ausführungsvarianten kann daran gedacht sein, dass andere Shuttles, welche in der Ein- und Auslager-Ebene verkehren, die Ladungsträger von den Übergabestationen zu den Übergabeplätzen und zurück transportieren, wobei diese Shuttles in der Ein- und Auslager-Ebene auch noch andere Aufgaben übernehmen. Vorzugsweise sind für den Transport von Ladungsträgern zwischen den Übergabeplätzen und Übergabestationen jedoch ein oder zwei überwiegend oder ausschliesslich für diese Aufgabe zuständige Shuttles vorgesehen.

Der optional vorhandene Quer-Verfahr-Wagen kann die Shuttles, welche den Senkrechtförderern zugeordnet sind, ersetzen. Im Übrigen sind die Quer-Verfahr-Wagen kompatibel mit sämtlichen nachstehend geschilderten Ausführungsbeispielen und Details der vorliegenden Erfindung.

Vorzugsweise sind die Übergabestationen entlang der Regalfront angeordnet. Die optionalen Quer-Verfahr-Wagen können verfahrbar auf einer Schiene angeordnet sein, welche parallel zur Regalfront und somit parallel zu den Übergabestationen verläuft.

Auf dieser Schiene können ein oder mehrere Quer-Verfahr-Wagen angeordnet sein.

Die Quer-Verfahr-Wagen können mit einem Lastaufnahmemittel wie beispielsweise einer Teleskopgabel ausgestattet sein, welche es erlaubt, einen Ladungsträger auf einer der Übergabestationen abzustellen oder von dort aufzunehmen. Vorzugsweise ist die Teleskopgabel hierfür orthogonal zur Längsrichtung der Schiene des Quer-Verfahr-Wagens bewegbar. Ferner kann die Teleskopgabel es erlauben, einen Ladungsträger an den Senkrechtförderer zu übergeben. Diese Übergabe kann direkt erfolgen, indem der Quer-Verfahr-Wagen den Ladungsträger direkt auf dem Senkrechtförderer, beispielsweise auf dessen Teleskopgabel, abstellt, oder indirekt, indem der Quer-Verfahr-Wagen den Ladungsträger auf einem dem Senkrechtförderer zugeordneten Übergabeplatz abstellt.

Es kann auch daran gedacht sein, dass die Quer-Verfahr-Wagen Ladungsträger, welche auf den Übergabestationen abgestellt wurden und in der Ein- und Auslager-Ebene eingelagert werden sollen, an die dort verkehrenden Shuttles übergibt. Beim Auslagern aus der Ein- und Auslager-Ebene gilt der umgekehrte Fall.

Alternativ oder zusätzlich zu dem vorbeschriebenen Lastaufnahmemittel, beispielsweise der Teleskopgabel, kann der Quer-Verfahr-Wagen ein Fördermittel wie beispielsweise einen Kettenförderer, einen Bandförderer oder einen Rollenförderer umfassen. In diesem Fall können auch einige oder sämtliche Übergabestationen und/oder Übergabeplätze mit Kettenförderern, Bandförderern, Rollenförderern oder dergleichen ausgestattet sein. Schliesslich kann beispielsweise eine passive Übergabestation ohne Fördermittel einen auf ihr abgestellten Ladungsträger nicht auf einen ausschliesslich mit einem Kettenförderer ausgerüsteten Quer-Verfahr-Wagen abstellen, und letzterer kann den Ladungsträger ohne zusätzliche Fördermittel nicht von einer passiven Übergabestation übernehmen.

Die Schiene des oder der Quer-Verfahr-Wagen kann zwischen den Senkrechtförderern im Regalbau und den Übergabestationen verlaufen.

Es kann daran gedacht sein, dass ein Transfer von Ladungsträgern zwischen den Übergabestationen und den Senkrechtförderern sowie auch den in der Ein- und Auslager-Ebene verkehrenden Shuttles ausschliesslich über die Quer-Verfahr-Wagen erfolgt, wenn zumindest ein solcher Quer-Verfahr-Wagen vorhanden ist.

Alternativ kann daran gedacht sein, dass die Schiene des oder der Quer-Verfahr-Wagen so ausgebildet und angeordnet ist, dass die Shuttles auf Ihren Fahrschienen fahrend die erstgenannte Schiene passieren können, um zu den Übergabestationen zu gelangen, und beispielsweise in der Ein- und Auslager-Ebene einzulagernde Ladungsträger von den Übergabestationen abholen. In diesem alternativen Beispiel bedienen die Quer-Verfahr-Wagen ausschliesslich oder zumindest überwiegend die Senkrechtförderer.

Die zumindest zwei Übergabestationen entkoppeln in vorteilhafter Weise die Aktionen beispielsweise des Flurförderzeugs, insbesondere des FTF, und des oder der im Regalbau verkehrenden Shuttle(s) oder des Quer-Verfahr-Wagens. Die vorgenannten Fördermittel müssen zur Übergabe eines Ladungsträgers daher nicht zur selben Zeit am selben Ort sein.

Vorzugsweise sind jeweils sowohl ein Übergabeplatz als auch eine Übergabestation vor dem Senkrechtförderer und jeweils ein Übergabeplatz und eine Übergabestation nach dem Senkrechtförderer angeordnet. Mit einer derartigen Anordnung können beim Ein- und Auslagern Doppelspiele ohne Blockade-Gefahr gefahren werden. Einerseits kann der Senkrechtförderer Doppelspiele fahren. Verlässt der Senkrechtförderer die Ein- und Auslager-Ebene in Richtung Lagerebene, so kann er stets einen einzulagernden Ladungsträger transportieren, und bei der anschliessenden Rückfahrt in die Ein- und Auslager-Ebene kann er stets einen auszulagernden Ladungsträger transportieren. Sind genau zwei Übergabeplätze vorhanden, wobei der Senkrechtförderer von einem ersten Übergabeplatz den einzulagernden Ladungsträger übernimmt und auf dem zweiten Übergabeplatz den auszulagernden Ladungsträger abstellt, so kommt es in unmittelbarer Nachbarschaft des Senkrechtförderers und im Rahmen von Übernahmen und Übergaben von Ladungsträgern von dem und an den Senkrechtförderer nicht zu Blockaden, weil Ein- und Auslagerungs-Vorgänge räumlich separiert sind. Sind dem Senkrechtförderer weiterhin genau zwei Shuttles zugeordnet, wobei ein erstes Shuttle überwiegend oder ausschliesslich einzulagernde Ladungsträger von der ersten Übergabestation zu dem ersten Übergabeplatz transportiert und wobei ein zweites Shuttle überwiegend oder ausschliesslich auszulagernde Ladungsträger von dem zweiten Übergabeplatz zu der zweiten Übergabestation transportiert, so werden etwaige Blockier-Effekte weiter vermieden. Schliesslich kann es beispielsweise nicht vorkommen, dass sich die zwei vorgenannten Shuttles "im Weg stehen". Dies wird auch durch den vorbeschriebenen Aufbau bewerkstelligt, da in Bezug auf die Längsrichtung einerseits die zumindest eine erste Übergabestation und der erste Übergabeplatz und andererseits die zumindest eine zweite Übergabestation und der zweite Übergabeplatz sich in Bezug auf den Senkrechtförderer sowie in Bezug auf die Längsrichtung der Regalfront jeweils auf verschiedenen Seiten des Senkrechtförderers befinden. Das zwischen dem ersten Übergabeplatz und einer der ersten Übergabestationen verkehrende Shuttle kreuzt daher nicht den Fahrweg eines zwischen dem zweiten Übergabeplatz und einer der zweiten Übergabestationen verkehrenden Shuttles.

In der Ein- und Auslager-Ebene können neben dem vorstehend beschriebenen zumindest einen Shuttle, welches überwiegend oder ausschliesslich Ladungsträger zwischen den Übergabeplätzen und den Übergabestationen transportiert, noch weitere Shuttles vorgesehen sein. Diese transportieren vorzugsweise überwiegend oder ausschliesslich Ladungsträger von den Übergabestationen zu Lagerplätzen in der Ein- und Auslager-Ebene.

Im Rahmen der vorliegenden Erfindung wird vorzugsweise diejenige Übergabestation als "erste Übergabestation" bezeichnet, welche von dem in seiner Fahrtrichtung und im Wesentlichen entlang der Regalfront sich bewegenden Flurförderzeug zuerst angefahren wird, und auf welcher ein Ladungsträger abgestellt wird. Üblicherweise sind die zweiten Übergabestationen zwar baugleich, dort nimmt das Flurförderzeug aber beispielsweise eine Palette auf. Analoge Überlegungen gelten vorzugsweise für die ersten und zweiten Übergabeplätze, welche in der Regel unmittelbar an den Senkrechtförderer angrenzen.

Besonders bevorzugt definiert sich eine erste Übergabestation dadurch, dass ein Flurförderzeug oder dergleichen einen einzulagernden Ladungsträger auf ihr abstellt, während eine zweite Übergabestation sich vorzugsweise dadurch definiert, dass ein Shuttle einen auszulagernden Ladungsträger auf ihr abstellt, welcher dann von einem Flurförderzeug oder dergleichen übernommen werden kann.

Die vorliegende Erfindung umfasst neben dem vorstehend beschriebenen Shuttle-System ein nachstehend beschriebenes **Verfahren** zum Betreiben eines solchen Shuttle-Systems. Merkmale und Details, welche nachstehend in Bezug auf das Verfahren beschrieben sind, können auch bei dem vorstehend beschriebenen Shuttle-System zum Einsatz kommen und umgekehrt.

Bei einem Verfahren zum Betreiben eines Shuttles-Systems, welches ausgeführt sein kann wie vorstehend beschrieben, ist vorgesehen, dass das das zumindest eine Shuttle oder ein Quer-Verfahr-Wagen einen einzulagernden Ladungsträger von einer Übergabestation übernimmt und/oder einen auszulagernden Ladungsträger an eine Übergabestation übergibt.

Hierbei können genau zwei Shuttles vorgesehen sein, wobei ein erstes Shuttle ausschliesslich einzulagernde Ladungsträger von einer der ersten Übergabestationen übernimmt und auf einem ersten Übergabeplatz abstellt, und wobei ein zweites Shuttle ausschliesslich auszulagernde Ladungsträger von dem zweiten Übergabeplatz übernimmt, und auf einer der zweiten Übergabestationen abstellt. Hierbei kann daran gedacht sein, jedem Senkrechtförderer die genau zwei vorbeschriebenen Shuttles zuzuordnen.

Vorzugsweise gilt also jedenfalls für alle Ausführungsformen ohne Quer-Verfahr-Wagen, dass die Übergabestationen lagerseitig ausschliesslich von den Shuttles bedient werden, welche in der Ein- und Auslager-Ebene verkehren. Weiter bevorzugt sind hierfür besondere Shuttles vorgesehen, welche überwiegend oder ausschliesslich Ladungsträger zwischen den Übergabestationen und den Übergabeplätzen transportieren, und beispielsweise nicht das Einlagern von Ladungsträgern in den Lagerplätzen der Ein- und Auslager-Ebene übernehmen.

Die Shuttles können sich zwar vorzugsweise horizontal bewegen, die Ebenen aber nicht wechseln, also beispielsweise nicht von der Ein- und Auslager-Ebene in eine der Lagerebenen wechseln. In einigen Ausführungsformen kann jedoch daran gedacht sein, Senkrechtförderer für die Shuttles einzusetzen, welche Shuttles zwischen den Ebenen des Regalbaus, also beispielsweise von der Ein- und Auslager-Ebene in eine der Lagerebenen, transportieren können. In einem solchen Fall kann auch ein zuvor in der Lagerebene verkehrendes Shuttle, nachdem es in die Ein- und Auslager-Ebene transportiert wurde, den Transport von Ladungsträgern zwischen den Übergabeplätzen und den Übergabestationen bewerkstelligen.

Ist ein Quer-Verfahr-Wagen vorhanden, so kann genau ein Quer-Verfahr-Wagen vorgesehen sein, welcher ein- und auszulagernde Ladungsträger handhabt. Alternativ kann daran gedacht sein, mehrere Quer-Verfahr-Wagen einzusetzen. Weiterhin kann angedacht sein, dass jedem Senkrechtförderer genau zwei Quer-Verfahr-Wagen zugeordnet sind. Falls zumindest ein Quer-Verfahr-Wagen vorhanden ist, so ist dieser vorzugsweise ausschliesslich in der Ein- und Auslager-Ebene vorhanden, während die Lagerebenen vorzugsweise keine Quer-Verfahr-Wagen umfassen.

Bei den Ladungsträgern kann es sich um Paletten handeln. Es kann jedoch auch an andere Ladungsträger, insbesondere Grossladungsträger, gedacht sein.

Die Übergabestationen und die Übergabeplätze können zwei parallele Abstell-Schienen umfassen, auf denen eine Palette abgestellt werden kann.

Vorzugsweise sind die Übergabestationen und die Übergabeplätze einfachtief, d.h. jede Übergabestation bietet nur Platz für genau eine Palette.

Vorzugsweise handelt es sich um passive Übergabestationen und Übergabeplätze, welche beispielsweise keine Fördermittel zum Bewegen der Ladungsträger umfassen.

Das Verfahren kann ein Einlagern und/oder ein Auslagern zumindest eines Ladungsträgers aus einer Lagerebene oder in eine Lagerebene mit folgenden Schritten umfassen:
- Zum Einlagern eines Ladungsträgers in eine Lagerebene wird der Ladungsträger auf einer ersten Übergabestation abgestellt und anschliessend von einem Shuttle oder einem Quer-Verfahr-Wagen zu einem ersten dem Senkrechtförderer zugeordneten Übergabeplatz transportiert, woraufhin der Senkrechtförderer den Ladungsträger übernimmt, und in die Lagerebene befördert,
- Zum Auslagern eines in einer Lagerebene gelagerten Ladungsträgers wird der Ladungsträger von einem in der Lagerebene verkehrenden Shuttle an den Senkrechtförderer übergeben, woraufhin der Senkrechtförderer den Ladungsträger in die Ein- und Auslager-Ebene befördert und auf einem zweiten Übergabeplatz abstellt, wo ein Shuttle oder ein Quer-Verfahr-Wagen den Ladungsträger übernimmt und zu einer zweiten Übergabestation transportiert.

Die vorstehende Übernahme des Ladungsträgers durch den Senkrechtförderer kann beispielsweise durch dessen Teleskopgabel erfolgen. Entsprechendes gilt für das Abstellen des Ladungsträgers auf den zweiten Übergabeplatz beim Auslagern.

Alternativ kann ein Verfahren ein Einlagern und/oder ein Auslagern zumindest eines Ladungsträgers aus einer Lagerebene oder in eine Lagerebene mit folgenden Schritten umfassen:
- Zum Einlagern eines Ladungsträgers in die Ein- und Auslager-Ebene wird der Ladungsträger auf einer ersten Übergabestation abgestellt und anschliessend von einem Quer-Verfahr-Wagen aufgenommen und an ein Shuttle übergeben, welches den Ladungsträger zu einem Lagerplatz transportiert,
- Zum Auslagern eines in der Ein- und Auslager-Ebene gelagerten Ladungsträgers wird dieser an seinem Lagerplatz von einem Shuttle übernommen und an den Quer-Verfahr-Wagen übergeben, welcher den Ladungsträger zu der zweiten Übergabestation transportiert.

Das Verfahren kann entweder nur das vorbeschriebene Einlagern oder nur das vorbeschriebene Auslagern oder beide Prozesse umfassen. Beispielsweise kann daran gedacht sein, dass das Verfahren nur das vorbeschriebene Auslagern umfasst, wenn ein Flurförderzeug leer, d.h. nicht mit einem Ladungsträger beladen, in die Lagervorzone einfährt oder im Allgemeinen an die Regalfront heranfährt. In einem solchen Fall soll das Flurförderzeug ausschliesslich einen Ladungsträger von einer Übergabestation aufnehmen und an einen Zielort transportieren.

Beim Einlagern wird der Ladungsträger vorzugsweise von einem FTF oder einem anderen Flurförderzeug auf der ersten Übergabestation abgestellt. Anschliessend wird der Ladungsträger vorzugsweise von dem bereits beschriebenen ersten Shuttle zu dem ersten dem Senkrechtförderer zugeordneten Übergabeplatz transportiert. Vorzugsweise übernimmt der Senkrechtförderer den Ladungsträger aktiv mit einem hierfür vorgesehenen Lastaufnahmemittel, wie beispielsweise einer Teleskopgabel.

Beim Auslagern kann ein in der Lagerebene verkehrendes Shuttle einen dort auf einem Lagerplatz eingelagerten Ladungsträger aufnehmen und an den Senkrechtförderer übergeben. In sämtlichen Lagerebenen können ein oder mehrere Shuttles verkehren. In jeder Lagerebene können Übergabeplätze, vorzugsweise genau zwei Übergabeplätze, neben dem Senkrechtförderer vorgesehen sein. Die Übergabe des Ladungsträgers von dem Shuttle in der Lagerebene an den Senkrechtförderer kann darin bestehen, dass der Senkrechtförderer mit einem geeigneten Lastaufnahmemittel den Ladungsträger aufnimmt, nachdem das Shuttle ihn auf einen Übergabeplatz in der Lagerebene abgestellt hat.

Die Übergabeplätze in den Lagerebenen können so ausgeführt sein, wie dies zuvor bereits im Hinblick auf die Übergabeplätze in der Ein- und Auslager-Ebene beschrieben wurde.

Es kann daran gedacht sein, dass der Senkrechtförderer den einzulagernden Ladungsträger auf einem Übergabeplatz in einer Lagerebene abstellt und einen auszulagernden Ladungsträger von einem anderen Übergabeplatz in derselben Lagerebene aufnimmt und in die Ein- und Auslager-Ebene transportiert.

Alternativ kann daran gedacht sein, dass der Senkrechtförderer nach dem Einlagern eines Ladungsträgers einen auszulagernden Ladungsträger aus einer anderen Lagerebene aufnimmt und in die Ein- und Auslager-Ebene transportiert. Beispielsweise kann der Senkrechtförderer nach der Übergabe eines einzulagernden Ladungsträgers auf einer weit oben im Regalbau gelegenen Lagerebene nach unten fahren, hierbei auf Höhe einer zwischen der vorgenannten Lagerebene und der Ein- und Auslager-Ebene anhalten, und einen dort bereitstehenden auszulagernden Ladungsträger aufnehmen. Auf diese Weise werden Einzelspiele auch dann vermieden und die Effizienz des Verfahrens auch dann erhöht, wenn in der Lagerebene, in welcher ein Ladungsträger eingelagert wird, momentan kein auszulagernder Ladungsträger bereitsteht.

Vorzugsweise umfasst auch die Ein- und Auslager-Ebene Lagerplätze. Ladungsträger können in dieser Ebene ohne die Benutzung der Senkrechtförderer ein- und ausgelagert werden. Umfasst das Verfahren ein Einlagern und/oder ein Auslagern zumindest eines Ladungsträgers aus der Ein- und Auslager-Ebene oder in die Ein- und Auslager-Ebene, so können folgende Schritte durchgeführt werden:
- Zum Einlagern eines Ladungsträgers in die Ein- und Auslager-Ebene wird der Ladungsträger auf einer ersten Übergabestation abgestellt und anschliessend von einem Shuttle zu einem Lagerplatz transportiert,
- Zum Auslagern eines in der Ein- und Auslager-Ebene gelagerten Ladungsträgers wird dieser an seinem Lagerplatz von einem Shuttle übernommen und zu einer zweiten Übergabestation transportiert.

Alternativ kann ein Verfahren ein Einlagern und/oder ein Auslagern zumindest eines Ladungsträgers aus der Ein- und Auslager-Ebene oder in die Ein- und Auslager-Ebene umfassen, bei dem folgende Schritte durchgeführt werden:
- Zum Einlagern eines Ladungsträgers in die Ein- und Auslager-Ebene wird der Ladungsträger auf einer ersten Übergabestation abgestellt und anschliessend von einem Quer-Verfahr-Wagen aufgenommen und an ein Shuttle übergeben, welches den Ladungsträger zu einem Lagerplatz transportiert
- Zum Auslagern eines in der Ein- und Auslager-Ebene gelagerten Ladungsträgers wird dieser an seinem Lagerplatz von einem Shuttle übernommen und an den Quer-Verfahr-Wagen übergeben, welcher den Ladungsträger zu der zweiten Übergabestation transportiert.

Vorzugsweise wird der einzulagernde Ladungsträger zum Einlagern von einem FTF auf der Übergabestation abgestellt. Zum Auslagern wird der auszulagernde Ladungsträger vorzugsweise von demselben oder einem anderen FTF übernommen.

Umfasst das Verfahren ein Einlagern und/oder ein Auslagern zumindest eines Ladungsträgers aus einer der der Lagerebenen oder in eine der Lagerebenen, so können folgende Schritte durchgeführt werden:
- Zum Einlagern des Ladungsträgers in der Lagerebene wird der Ladungsträger von einem Flurförderzeug, beispielsweise einem FTF, auf der ersten Übergabestation abgestellt und anschliessend von einem ersten Shuttle zu einem ersten dem Senkrechtförderer zugeordneten Übergabeplatz transportiert, woraufhin der Senkrechtförderer den Ladungsträger übernimmt, und in die Lagerebene befördert,
- zum Auslagern des in der Lagerebene gelagerten Ladungsträgers wird dieser von dem in der Lagerebene verkehrenden Shuttle an den Senkrechtförderer übergeben, woraufhin der Senkrechtförderer den Ladungsträger in die Ein- und Auslager-Ebene befördert und auf dem zweiten Übergabeplatz abstellt, wo das erste oder ein zweites Shuttle den Ladungsträger übernimmt und zu der zweiten Übergabestation transportiert,

wobei das Flurförderzeug oder ein anderes Flurförderzeug den auf der zweiten Übergabestation abgestellten Ladungsträger übernimmt,
wobei eine Fahrtrichtung des Flurförderzeugs entlang der Regalfront verläuft, und
wobei als zweite Übergabestation eine Übergabestation ausgewählt wird, welche sich in Bezug auf die Fahrtrichtung stromabwärts der ersten Übergabestation befindet.

Es kann daran gedacht sein, dass das Flurförderzeug zunächst den Ladungsträger auf der ersten Übergabestation abstellt und dann einen auszulagernden Ladungsträger übernimmt, welcher von demselben Senkrechtförderer in die Ein- und Auslager-Ebene transportiert wurde, und somit auf einem zweiten Übergabeplatz bereitsteht, welcher diesem Senkrechtförderer zugeordnet ist.

Der Senkrechtförderer kann diesen auszulagernden Ladungsträger in die Ein- und Auslager-Ebene befördern, bevor oder nachdem er den einzulagernden Ladungsträger in die Lagerebene befördert hat.

Es kann auch daran gedacht sein, dass das Flurförderzeug zunächst den Ladungsträger auf der ersten Übergabestation abstellt, die dem Senkrechtförderer zugeordnet ist, und dann einen auszulagernden Ladungsträger übernimmt, welcher von einem anderen Senkrechtförderer in die Ein- und Auslager-Ebene transportiert wurde, und auf einer zweiten Übergabestation bereitsteht, welche diesem anderen Senkrechtförderer zugeordnet ist.

Die vom Flurförderzeug angefahrene zweite Übergabestation, von welchem dieses einen Ladungsträger übernimmt, kann also einem anderen Senkrechtförderer zugeordnet sein, als die erste Übergabestation, auf welcher das Flurförderzeug zuvor den einzulagernden Ladungsträger abgestellt hat. Der andere Senkrechtförderer befindet sich jedoch vorzugsweise stromabwärts des erstgenannten Senkrechtförderers, so dass das Flurförderzeug seine Fahrtrichtung entlang der Regalfront nicht ändern muss. Führen mehrere, den Regalbau in kurzen Zeitabständen erreichende Flurförderzeuge die vorgenannten Schritte aus, so wird durch die Auswahl der vorgenannten Fahrtrichtung eine Situation mit Gegenverkehr vermieden.

Dies gilt vorzugsweise für sämtliche Ausführungsformen der vorliegenden Erfindung: Die Flurförderzeuge fahren im Wesentlichen entlang und somit parallel zu der Regalfront, wobei sie beispielsweise zwecks Abstellen und Aufnehmen eines Ladungsträgers auch abschnittsweise im Wesentlichen orthogonal zur Regalfront fahren können. Die Fahrt entlang und parallel zu der Regalfront erfolgt jedoch von der einfahrt in die Lagervorzone bis zum Verlassen der Lagervorzone vorzugsweise stets nur in einer Richtung.

Sind die erste und die zweite Übergabestation, welche von dem Flurförderzeug zwecks Abstellen und Aufnehmen eines Ladungsträgers angefahren werden, demselben Senkrechtförderer zugeordnet, so befindet sich die zweite Übergabestation vorzugsweise entlang der Fahrtrichtung des Flurförderzeugs, welche wiederum entlang der Regalfront verläuft, hinter der zuvor angefahrenen ersten Übergabestation.

Wie vorstehend bereits angedeutet wurde, gilt dasselbe vorzugsweise auch für den Fall, dass die zweite Übergabestation einem anderen Senkrechtförderer zugeordnet ist, als die erste Übergabestation. Somit wird sichergestellt, dass das Flurförderzeug vorzugsweise stets nur in einer Richtung entlang der Regalfront verkehrt. Richtungsänderungen, also sozusagen eine Rückwärts-Fahrt, könnten zu Blockier-Effekten führen, wenn eine Mehrzahl von Flurförderzeugen entlang der Regalfront verkehren.

Vorzugsweise verkehren mehrere Flurförderzeuge entlang der Regalfront, und vorzugsweise verkehren all diese Flurförderzeuge entlang derselben parallel und entlang der Regalfront verlaufenden Vorzugsrichtung. Dies gilt entweder für die gesamte Regalfront oder für mehrere Abschnitte, in welche die Regalfront hinsichtlich der Fahrtrichtungen der Flurförderzeuge unterteilt werden kann. In einem betrachteten Abschnitt entlang der Regalfront fahren vorzugsweise sämtliche dort verkehrenden Flurförderzeuge in dieselbe Richtung.

Bei dem vorbeschriebenen Verfahren umfassend ein Einlagern und/oder ein Auslagern zumindest eines Ladungsträgers aus einer der Lagerebenen kann daran gedacht sein, dass ein beliebiges innerhalb der Ein- und Auslager-Ebene verkehrendes Shuttle den Transport von Ladungsträgern zwischen den Übergabeplätzen und den Übergabestationen übernimmt. Hierfür können alternativ auch bestimmte Shuttles oder ein bestimmtes Shuttle vorgesehen sein. Besonders bevorzugt kann angedacht sein, genau ein besonderes Shuttle oder genau zwei besondere Shuttles vorzusehen. Im Fall von zwei besonderen Shuttles ist vorzugsweise ein erstes Shuttle vorgesehen, um zwischen dem ersten Übergabeplatz und der ersten Übergabestation zu pendeln, und ein zweites Shuttle ist entsprechend vorgesehen, zwischen dem zweiten Übergabeplatz und der zweiten Übergabestation zu pendeln. Sind eine Vielzahl von Übergabestationen vorhanden, so pendeln die Shuttles jeweils zwischen einer der Übergabestationen und dem entsprechend zugehörigen Übergabeplatz. Die vorbeschriebenen besonderen Shuttles, bevorzugt genau ein oder genau zwei besondere Shuttles, können jeweils einem Senkrechtförderer zugeordnet sein.

Wie vorstehend bereits angedeutet, kann an Ausführungsformen des Verfahrens gedacht sein, bei denen eine Vorzugsrichtung dergestalt entlang der Regalfront vorherrscht, dass entlang der Regalfront verkehrende Flurförderzeuge sich im Wesentlichen an jedem Punkt entlang der Regalfront nur in eine Richtung bewegen. Dadurch kann Gegenverkehr weitgehend oder vollständig vermieden werden, was den Durchsatz erhöht.

Es kann daran gedacht sein, dass ein überwiegender Anteil der Flurförderzeuge oder sämtliche Flurförderzeuge die Vorzugsrichtung befolgen. Weiterhin kann angedacht sein, dass die Flurförderzeuge die Vorzugsrichtung bei einem überwiegenden Anteil der Fahrten oder immer befolgen.

Abhängig von der Anzahl der entlang der Regalfront verkehrenden Flurförderzeuge kann die Vorzugsrichtung als ein- oder zweispurige Einbahnstrasse entlang der Regalfront implementiert sein.

Üblicherweise existiert zumindest ein Punkt oder ein Abschnitt an der Regalfront, welchen die Flurförderzeuge ansteuern, bevor sie entlang der Regalfront zu den entsprechenden Übergabestationen fahren. Liegt dieser Punkt oder Abschnitt am Anfang oder am Ende der Regalfront, also beispielsweise an einer Ecke eines im Grundriss rechteckigen Regalbaus, so herrscht entlang der Regalfront vorzugsweise eine einzige Vorzugsrichtung entlang der gesamten Regalfront. Ist dieser Punkt oder Abschnitt jedoch in Bezug auf eine Gesamtlänge der Regalfront nicht endständig, sondern beispielsweise mittig angeordnet, so kann angedacht sein, dass die Flurförderzeuge ausgehend von diesem Punkt oder Abschnitt in zwei Richtungen an der Regalfront entlangfahren können. Ab diesem Punkt oder Abschnitt können in beide Richtungen Einbahnstrassen vorliegen.

Alternativ kann auch daran gedacht sein, dass jedes Flurförderzeug beispielsweise erst an derjenigen Übergabestation an die Regalfront heranfährt, an welcher es einen Ladungsträger aufnehmen soll. Anschliessend kann eine Entlangfahrt an der Regalfront wie vorstehend beschrieben stattfinden, wobei ebenfalls eine Vorzugsrichtung, beispielsweise Einbahnstrassenverkehr herrschen kann. Im Unterschied zu der vorbeschriebenen Variante existieren jedoch genau so viele Punkte, um die Regalfront im Vorfeld der Entlangfahrt an der Regalfront anzusteuern, wie Übergabestationen. Zumindest existieren so viele solcher Punkte wie zweite Übergabestationen.

Im Lichte der vorstehend beschriebenen Details und Varianten des Verfahrens kann dieses einem konkreten Ausführungsbeispiel gemäss wie folgt ausgestaltet sein:
Ein mit einem Ladungsträger beladenes FTF fährt in die Lagervorzone ein und danach zu einem Punkt oder Abschnitt der Regalfront, und von dort aus entlang der Regalfront zu einer ersten Übergabestation, wo es den Ladungsträger abstellt. Ein erstes Shuttle, welches in der Ein- und Auslager-Ebene zwischen den ersten Übergabeplätzen und der ersten Übergabestation eines Senkrechtförderers hin- und her pendelt, übernimmt den Ladungsträger an der ersten Übergabestation und befördert diesen zu dem Senkrechtförderer, welcher den Ladungsträger in eine Lagerebene befördert. Das vorgenannte Shuttle kann dem vorgenannten Senkrechtförderer zugeordnet sein. Die Aufgabe dieses Shuttles kann auch von einem Quer-Verfahr-Wagen übernommen werden.

Währenddessen fährt das FTF entlang der Regalfront in Vorzugsrichtung weiter zu einer zweiten Übergabestation, wobei entweder eine der zweiten Übergabestationen desselben Senkrechtförderers oder eine zweite Übergabestation eines in Vorzugsrichtung weiter entfernt liegenden Senkrechtförderers angesteuert wird. Dort nimmt das FTF einen auf dieser zweiten Übergabestation abgestellten Ladungsträger auf und befördert ihn zu seinem Ziel-Ort, beispielsweise zu einer Produktionsanlage oder zu einer Kommissionier-Einrichtung. Der erstgenannte Senkrechtförderer befördert auf dem Rückweg von der Lagerebene in die Ein- und Auslager-Ebene einen auszulagernden Ladungsträger von derselben oder einer anderen Lagerebene in die Ein- und Auslager-Ebene. Der Senkrechtförderer arbeitet somit im Doppelspiel-Betrieb. Steuert das FTF eine zweite Übergabestation eines in Vorzugsrichtung weiter hinten, also stromabwärts liegenden Senkrechtförderers an, so wird der auszulagernde Ladungsträger, welchen der erstgenannte Senkrechtförderer bei der Rückfahrt von der Lagerebene in die Ein- und Auslager-Ebene befördert hat, von einem anderen, insbesondere von einem dem erstgenannten FTF nachfolgenden zweiten FTF, übernommen. Abgesehen von dem Punkt oder Abschnitt der Regalfront, an welchem die FTF von der Lagervorzone her kommend den Regalbau erreichen, herrscht vorzugsweise an jedem Punkt entlang der Regalfront eine einzige Vorzugsrichtung, so dass sämtliche diesen Punkt passierenden FTF in derselben Richtung entlang der Regalfront verkehren.

Es kann daran gedacht sein, eine zentrale Konturenkontrolle dergestalt vorzusehen, dass sämtliche Flurförderzeuge dieselbe Einrichtung zur Konturenkontrolle passieren. Es kann auch daran gedacht sein, mehrere Einrichtungen zur Konturenkontrolle vorzusehen, so dass Flurförderzeuge, die aus verschiedenen Richtungen auf den Regalbau zufahren, keine Umwege fahren müssen, um die Einrichtung zur Konturenkontrolle zu erreichen. In allen Fällen ist vorzugsweise daran gedacht, dass eine oder mehrere solcher Einrichtungen von jeweils mehreren Flurförderzeugen benutzt wird bzw. benutzt werden. Im Anschluss an das Passieren der zumindest einen zentralen Konturenkontrolle können die Flurförderzeuge an einem Punkt oder Abschnitt der Regalfront ihre Fahrt entlang der Regalfront zu den Übergabestationen beginnen. Die zentrale Konturenkontrolle kann an einem Rand oder einer Grenze der Lagervorzone angeordnet sein.

Es kann daran gedacht sein, dass einem Teil der Senkrechtförderer oder jedem Senkrechtförderer zumindest drei Übergabestationen zugeordnet sind. Abhängig von einer Auftragslast kann für zumindest eine der Übergabestationen festgelegt werden, ob sie für das Einlagern oder für das Auslagern von Ladungsträgern genutzt wird. Es kann auch daran gedacht sein, dass für sämtliche Übergabestationen des Senkrechtrechtförderers abhängig von der Auftragslast festgelegt wird, ob sie für das Einlagern oder für das Auslagern von Ladungsträgern genutzt werden. Analoges kann alternativ oder zusätzlich für die Übergabeplätze gelten.

Es kann angedacht sein, dass eine Sequenzbildung für zumindest zwei Ladungsträger derart erfolgt, dass die Flurförderzeuge, welche die Ladungsträger von den zweiten Übergabestationen übernehmen, die Sequenz bilden. Müssen zumindest zwei Ladungsträger für beispielsweise eine routenoptimierte Verladung auf einem Fahrzeug, eine Kommissionierung, einen Produktionsprozess oder dergleichen in eine bestimmte Reihenfolge gebracht und insbesondere in einer bestimmten Reihenfolge von den Flurförderzeugen angeliefert werden, so ist es vorteilhaft, wenn diese Reihenfolge von den Flurförderzeugen gebildet wird. Dies erhöht die Flexibilität im Lager, d.h. im Regalbau, weil die zur Bildung einer Sequenz benötigen Ladungsträger entlang der Regalfront in beliebiger Reihenfolge auf den Übergabestationen bereitgestellt werden können. Solange die für die Sequenz-Bildung benötigten Ladungsträger innerhalb eines Zeitraums bereitgestellt werden, in welchem die sie aufnehmenden Flurförderzeuge entlang der Regalfront verkehren, besteht sowohl zeitlich als auch räumlich eine Flexibilität in der Handhabung dieser Ladungsträger. In welcher zeitlichen Reihenfolge die vorgenannten Ladungsträger auf den zweiten Übergabestationen abgestellt werden, und auf welchen zweiten Übergabestationen sie abgestellt werden, ist dann unerheblich. Der zuerst benötigte Ladungsträger kann von dem zuerst verfügbaren Flurförderzeug abgeholt werden, der als zweites benötigte Ladungsträger von dem danach verfügbaren Flurförderzeug usw. Hierbei ist es vorteilhaft, wenn eine Vielzahl zweiter Übergabestationen vorhanden ist, so dass auch bei der parallelen Bearbeitung beispielsweise zweier KommissionierAufträge stets ausreichend freie zweite Übergabestationen zur Verfügung stehen. Oftmals genügt es, hierfür jedem Senkrechtförderer zwei oder drei zweite Übergabestationen zuzuordnen, es können aber auch mehr sein.

Die Sequenz-Bildung wird also grösstenteils ausgelagert, findet also grösstenteils nicht im Regalbau statt. Im Regalbau findet nur insofern ein Teil der Sequenz-Bildung statt, als die für eine Sequenz-Bildung benötigen Ladungsträger im Wesentlichen innerhalb des vorbeschriebenen Zeitraums auf den zweiten Übergabestationen abgestellt werden, damit die eigentliche Sequenz-Bildung durch die FTF erfolgen kann. Durch die ausreichende Anzahl vorhandener zweiter Übergabestationen, auf denen die für eine Sequenz benötigen Ladungsträger abgestellt werden können, in Verbindung mit der vorbeschriebenen spät und nur teilweise im Materialfluss im Regalbau stattfindenden Sequenz-Bildung können Flexibilität und Effizienz aller Verfahren ohne Rücksicht auf die finale Sequenz-Bildung erfolgen, da letztere ausserhalb des Regalbaus durch die FTF geschieht.

Kommen mehrere erste und/oder mehrere zweite Übergabestationen zum Einsatz, so kann angedacht sein, dass das Shuttle, vorzugsweise das erste Shuttle, oder der Quer-Verfahr-Wagen zum Einlagern aus mehreren Ladungsträgern, die auf mehreren ersten Übergabestationen bereitstehen, denjenigen zum Senkrechtförderer transportiert, welcher den kürzesten Fahrweg oder die kürzeste Entfernung zum Senkrechtförderer oder zum ersten Übergabeplatz aufweist. Alternativ oder zusätzlich kann angedacht sein, dass das Shuttle, vorzugsweise das zweite Shuttle, oder der Quer-Verfahr-Wagen zum Auslagern einen auszulagernden Ladungsträger auf derjenigen zweiten Übergabestation abstellt, welche aus einer Gruppe von mehreren zweiten Übergabestationen den kürzesten Fahrweg oder die kürzeste Entfernung zum Senkrechtförderer oder zum zweiten Übergabeplatz aufweist. Die vorbeschriebene Gruppe von mehreren zweiten Übergabestationen wird üblicherweise so ausgewählt, dass diese zweiten Übergabestationen momentan nicht besetzt sind. Wie vorstehend umschrieben, können das oder die Shuttle(s), welche zwischen den Übergabeplätzen und den Übergabestationen verkehren, also spielzeitoptimiert betrieben werden. Durchsatz-abhängig kann es bei einem solchen Verfahren dazu kommen, dass ein Ladungsträger, welcher auf einer sehr weit von dem Senkrechtförderer entfernten Übergabestation abgestellt wurde, zu lange dort verbleibt. Um dies zu verhindern, kann angedacht sein, den spielzeit-optimierten Betrieb und insbesondere den Transport eines Ladungsträgers mit kurzem Fahrweg zwischen erster Übergabestation und erstem Übergabeplatz davon abhängig zu machen, ob ein weiter entfernt liegender Ladungsträger schon länger als einen vorbestimmten Zeitraum auf einer ersten Übergabestation liegt und auf Abholung und Transport zu dem ersten Übergabeplatz wartet. Umgekehrt wird, wie vorstehend bereits beschrieben, vorzugsweise die nächstliegende freie, d.h. nicht von einem Ladungsträger belegte zweite Übergabestation ausgewählt, welche dem betreffenden Senkrechtförderer zugeordnet ist.

### Bei allen Ausführungsformen der vorliegenden Erfindung kann an folgende Aspekte gedacht sein:

Dem Regalbau kann eine Lagervorzone zugeordnet sein, diese ist aber nicht zwingend vorhanden. Die Flurförderzeuge können auch auf andere Weise als über eine Lagervorzone zu der Regalfront gelangen.

Der Regalbau kann als Regallager, vorzugsweise als Paletten-Kanallager ausgeführt sein. Die Shuttles können Paletten-Shuttles sein, welche eingerichtet sind, Paletten zu transportieren sowie ein- und auszulagern. Hierfür können die Shuttles Lastaufnahmemittel, insbesondere eine Hub-Einrichtung, umfassen.

In dem Regalbau können Fahrschienen für die Shuttles und parallel und vorzugsweise direkt oberhalb der Fahrschienen verlaufende Abstell-Schienen verlaufen, welche in einem Raster angeordnet sind. Diese Schienen können sowohl Gassen als auch andere Fahrwege bilden. Vorzugsweise verlaufen die Fahrwege parallel und/oder orthogonal zueinander. Nach einem Anheben des Ladungsträgers, insbesondere der Palette, mit dem Lastaufnahmemittel, kann das Shuttle auf den Fahrschienen fahrend den Ladungsträger im Regal transportieren. Durch Absenken des Lastaufnahmemittels wird der Ladungsträger auf den Abstell-Schienen abgestellt. Sowohl die Lagerkanäle als auch die Übergabestationen und Übergabeplätze können als wesentlichen Bestandteil einen Abschnitt mit zwei parallel verlaufenden Fahrschienen und zwei oberhalb und parallel verlaufenden Abstell-Schienen umfassen.

Das vorgenannte Raster besteht vorzugsweise aus orthogonal und parallel zueinander verlaufenden Fahr- und Abstell-Schienen. Beispielsweise können mehrere Fahrschienen parallel zueinander verlaufen und durch orthogonal dazu verlaufende Fahrschienen miteinander verbunden sein. Oberhalb der vorgenannten Fahrschienen verlaufen die Abstell-Schienen, welche parallel zur jeweils darunterliegenden Fahrschiene ausgerichtet sind.

Die Shuttles sind vorzugsweise als bidirektionale Shuttles ausgeführt, welche ihre Fahrtrichtung um 90° ändern können, beispielsweise durch zwei Fahrwerke oder zwei Sets umfassend mehrere Räder oder dergleichen, von denen zumindest eines ein- und ausfahrbar oder absenkbar ist.

Vorzugsweise sind zumindest einem Teil der Senkrechtförderer, noch bevorzugter jedem Senkrechtförderer, zwei oder mehr Übergabestationen und genau zwei Übergabeplätze zugeordnet.

Vorzugsweise sind die Übergabestationen stets so angeordnet, dass sie eine Schnittstelle zwischen dem Regalbau und einem direkt vor der Regalfront liegenden Abschnitt ausserhalb des Regalbaus bilden. Eine Anordnung der Übergabestationen, insbesondere relativ zu einer Fläche, auf welcher die Flurförderzeuge verkehren, ist so gewählt, dass die Flurförderzeuge, welche üblicherweise mit Lastaufnahmemitteln wie einer Hub-Einrichtung ausgestattet sind, in die Übergabestation einfahren und Ladungsträger dort mit Hilfe des Lastaufnahmemittels abstellen und aufnehmen können.

Vorzugsweise verbinden die Senkrechtförderer sämtliche Ebenen des Regalbaus miteinander. Es kann auch daran gedacht sein, dass ein Senkrechtförderer lediglich die Ein- und Auslager-Ebene mit einigen der Lagerebenen verbindet.

Im Übrigen kann der Regalbau ausgebildet sein, wie dies von Paletten-Kanallagern, welche mit Shuttles betrieben werden, bekannt ist. Lagerkanäle, in welchen die Lagerplätze angeordnet sind, können einfach- oder mehrfachtief sein.

Wird im Rahmen der vorliegenden Erfindung von einem ersten Übergabeplatz oder einer ersten Übergabestation gesprochen, so kommen diese vorzugsweise beim Einlagern zum Einsatz. Entsprechend kommen eine zweite Übergabestation und ein zweiter Übergabeplatz beim Auslagern zum Einsatz. Entsprechendes gilt für ein erstes und ein zweites innerhalb der Ein- und Auslager-Ebene verkehrendes Shuttle, aber nicht für ein erste und ein zweites Flurförderzeug.

Das Shuttle-System kann einen Materialflussrechner umfassen oder mit einem solchen Materialflussrechner in Wirkverbindung stehen. Der Materialflussrechner kann Ressourcen verwalten, und Aufträge den Shuttles, Senkrechtförderern und Flurförderfahrzeugen zuordnen. Der Materialflussrechner kann auch an eine Einrichtung zur Konturenkontrolle angebunden sein.

Obwohl der Grundriss des Regalbaus vorzugsweise im Wesentlichen rechteckig ist, kann er von einem idealen Rechteck abweichen, ohne an Funktionsfähigkeit einzubüssen. Hierbei können kleinere Abweichungen von einem idealen Rechteck in der Regel problemlos implementiert werden, auch eine Sägezahn-artige Anordnung der Übergabestationen an der Grenze zwischen der Ein- und Auslager-Ebene und der Lagervorzone ist denkbar.

### Figurenbeschreibung

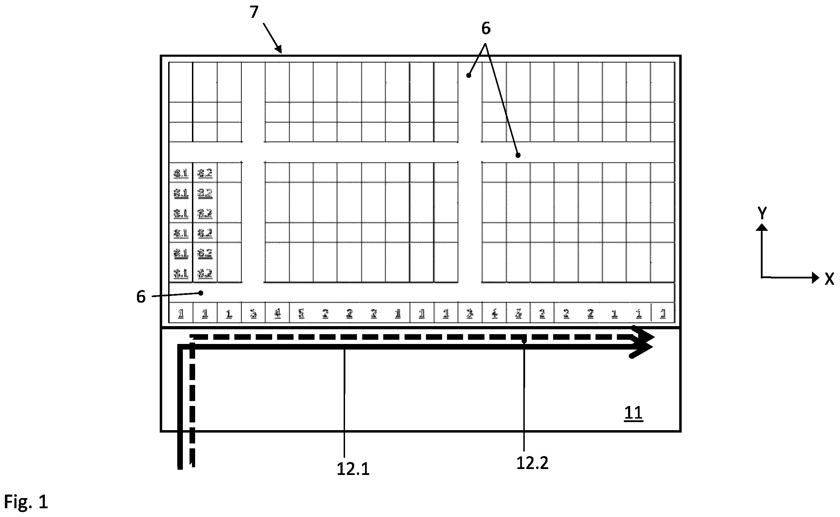

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in den Figuren 1 bis 6verschiedene Ausführungsformen eines erfindungsgemässen Shuttle-Systems.

### Ausführungsbeispiel

In den Figuren 1 bis 6 ist jeweils eine Draufsicht auf einen Teil einer Ein- und Auslager-Ebene 7 eines Shuttle-Systems mit der vorgelagerten Lagervorzone 11 dargestellt. Die X- und Y-Richtung ist jeweils angedeutet. Hierbei sind in der Ein- und Auslager-Ebene 7 Fahrwege 6 zu erkennen, welche in X- und Y-Richtung verlaufen. Die in X-Richtung verlaufenden Fahrwege 6 können als Gassen bezeichnet werden, die in y-Richtung verlaufenden Fahrwege 6 als Verbindungswege zwischen den Gassen.

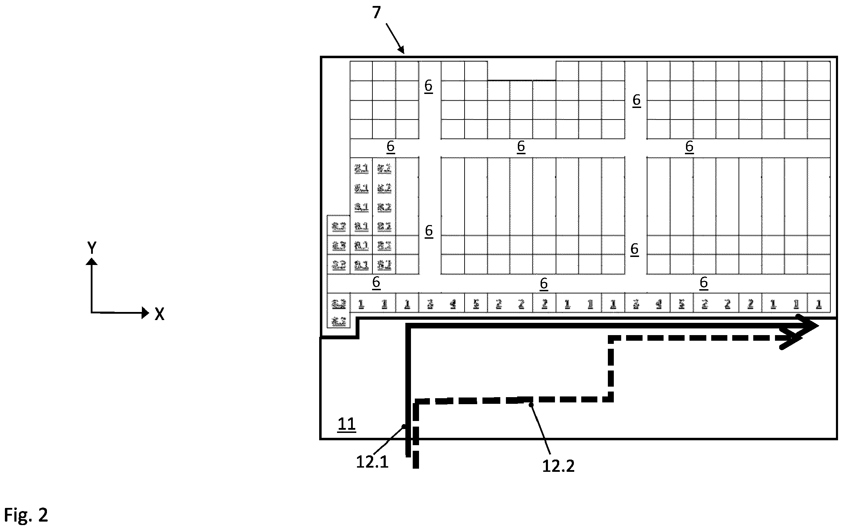

Ferner sind mehrere erste und zweite Übergabestationen 1, 2, mehrere erste und zweite Übergabeplätze 3, 5 und mehrere Senkrechtförderer 4 zu erkennen. Mehrere in Y-Richtung hintereinanderliegende Lagerplätze 8.1 bilden gemeinsam einen in Y-Richtung verlaufenden Lagerkanal. Dasselbe gilt für die Lagerplätze 8.2 sowie die Lagerplätze 8.3 in Figur 2. Die übrigen Lagerplätze und Lagerkanäle wurden der Übersicht halber nicht gesondert mit Bezugsziffern versehen.

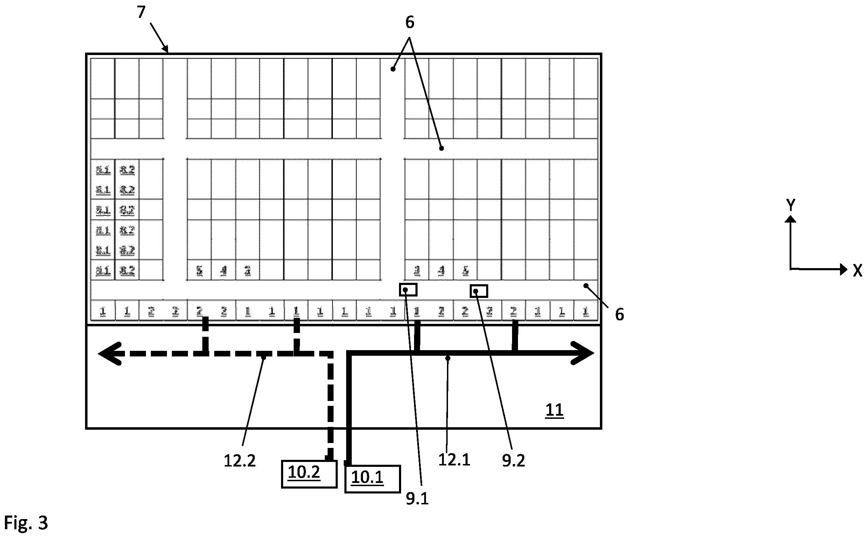

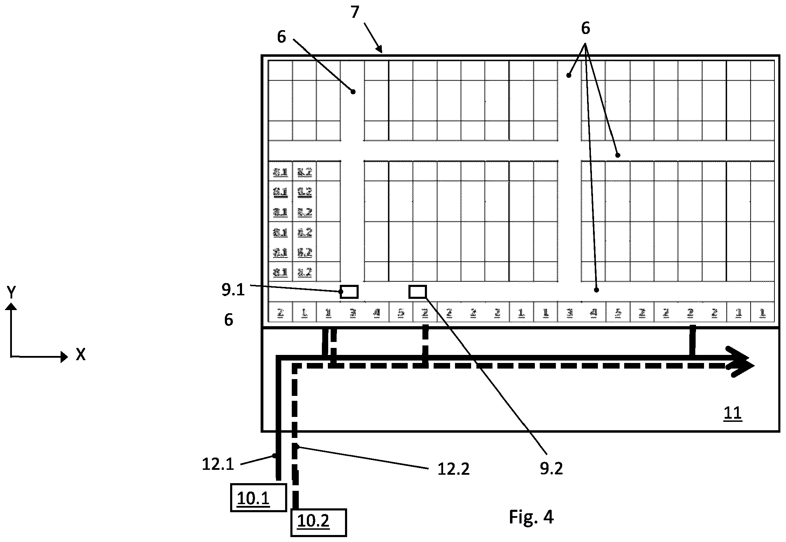

In den Figuren 3 und 4 sind zwei Shuttle 9.1, 9.2 und zwei FTF 10.1, 10.2 angedeutet.

In den Figuren 1 bis 4 sind zwei FTF-Fahrtrichtungen (kurz: "Fahrtrichtungen") 12.1, 12.2 zu sehen. Die Fahrtrichtungen 12.1, 12.2 stellen, insbesondere in den Figuren 3 und 4, die Fahrtwege der FTF 10.1, 10.2 in der Lagervorzone 11 dar. In Figur 5 ist der besseren Übersicht halber keine Fahrtrichtung 12 angedeutet, in Figur 6 ist der besseren Übersicht halber nur eine einzige Fahrtrichtung 12 angedeutet.

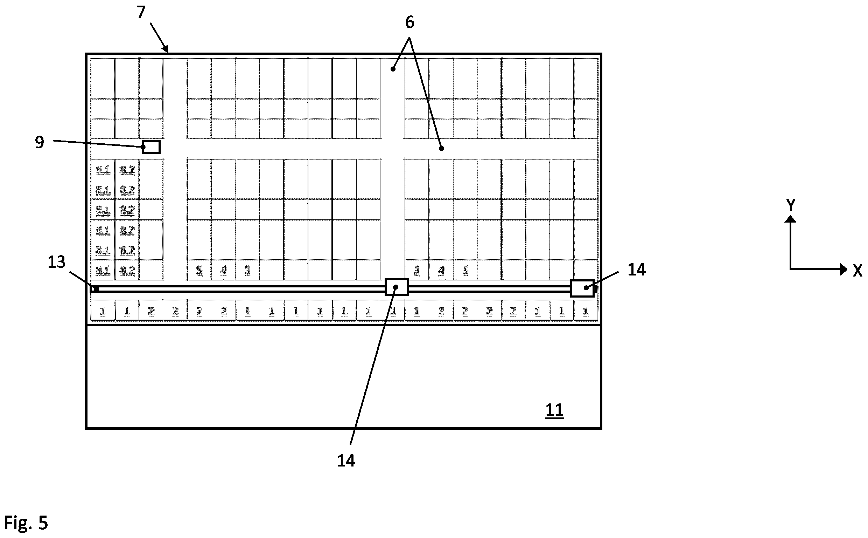

Das Ausführungsbeispiel gemäss Figur 5 umfasst im Gegensatz zu denjenigen gemäss den Figuren 1 bis 4 Quer-Verfahr-Wagen 14 auf einer Schiene 13.

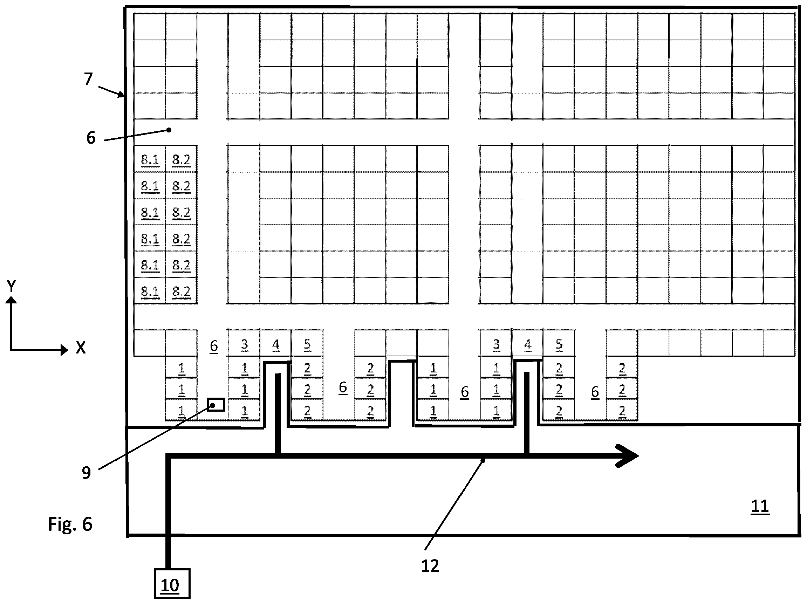

Das Ausführungsbeispiel gemäss Figur 6 umfasst im Gegensatz zu den Figuren 1 bis 5 Sägezahn-artige und in y-Richtung in die Lagervorzone 11 hineinragende Anordnungen der Übergabestationen 1, 2.

Gleiche Elemente wurden der besseren Übersicht halber nicht in sämtlichen Figuren mit Bezugsziffern versehen.

Bezugnehmend auf die Figuren 1 bis 6 erklärt sich die Funktionsweise des erfindungsgemässen Shuttle-Systems folgendermassen:
Wie beispielsweise in Figur 4 erkennbar, fährt ein mit einem (hier nicht dargestellten) Ladungsträger, beispielsweise einer Palette, beladenes FTF 10.1 in die Lagervorzone 11 ein. Das FTF 10.1 kann beispielsweise der Fahrtrichtung 12.1 folgend zunächst eine Palette auf einer ersten Übergabestation 1 abstellen. Dies ist in Figur 4 durch einen senkrechten, aber nicht mit Pfeilspitzen versehenen durchgehenden Strich angedeutet, welcher als Abzweigung der Fahrtrichtung 12.1 zu der ersten Übergabestation 1 verläuft, die als dritte Übergabestation 1 von links in Figur 4 angeordnet ist.

Analog stellt das FTF 10.1 in Figur 3, welches der Fahrtrichtung 12.1 folgt, seine Palette auf der ersten Übergabestation 1 ab, die als achte Übergabestation 1 von rechts angeordnet ist. Dies ist ebenfalls durch einen senkrechten und von der Fahrtrichtung 12.1 abzweigenden Strich in Figur 3 angedeutet.

Anschliessend fährt das FTF 10.1 im Beispiel gemäss Figur 4 entlang einer Regalfront in Pfeilrichtung, in Figur 4 also nach rechts. Dies entspricht einer Fahrt "stromabwärts" in Bezug auf die Fahrtrichtungen 12.1, 12.2.

Die hier nicht mit Bezugsziffern versehene Regalfront bezeichnet im Grundriss eine Kante des Regalbaus, hier also der Ein- und Auslager-Ebene 7, welche an die Lagervorzone 11 angrenzt.

Nachdem das nun nicht mehr beladene FTF 10.1 ein Stück weit in Richtung des die Fahrtrichtung 12.1 darstellenden Pfeils, in den Figuren 3 und 4 also nach rechts, gefahren ist, nimmt es eine (nicht dargestellte) Palette von einer zweiten Übergabestation 2 auf. Hierbei handelt es sich in den Figuren 3 und 4 um die zweite Übergabestation 2, welche als dritte Übergabestation 2 von rechts angeordnet ist. Danach verlässt das FTF 10.1 die Lagervorzone 11 in Richtung des die Fahrtrichtung 12.1 darstellenden Pfeils, in den Figuren 3 und 4 also nach rechts, was hier nur durch die Pfeilspitze angedeutet ist.

In der Variante nach Figur 4 transportiert das erste Shuttle 9.1 die von dem FTF 10.1 auf der ersten Übergabestation 1 abgestellte Palette zu dem Übergabeplatz 3. Somit kann ein zweites FTF 10.2, welches nach dem vorbeschriebenen FTF 10.1 in die Lagervorzone 11 einfährt, eine Palette auf derselben ersten Übergabestation 1 abstellen. Die Fahrtrichtung 12.2 des zweiten FTF 10.2 ist durch eine gestrichelte Linie angedeutet.

Nachdem das erste Shuttle 9.1 die von dem erstgenannten FTF 10.1 auf der ersten Übergabestation 1 abgestellte Palette zu dem direkt benachbarten ersten Übergabeplatz 3 transportiert hat, befördert der direkt daneben befindliche Senkrechtförderer 4, d.h. in Figur 4 der links gezeigte Senkrechtförderer 4 und in Figur 3der rechts gezeigte Senkrechtförderer 4, die Palette in eine (nicht gezeigte) Lagerebene. Bei der Rückfahrt in die Ein- und Auslager-Ebene 7 befördert der Senkrechtförderer 4 eine auszulagernde Palette, die er auf dem zweiten Übergabeplatz 5 direkt neben sich abstellt. Das zweite Shuttle 9.2 transportiert die auszulagernde Palette von diesem zweiten Übergabeplatz 5 zu einer dem Senkrechtförderer 4 zugeordneten zweiten Übergabestation 2, in Figur 4 also zu der direkt an den zweiten Übergabeplatz 5 angrenzenden zweiten Übergabestation 2. Von dort holt das zweite FTF 10.2 diese Palette ab und fährt anschliessend entlang der Regalfront in Fahrtrichtung 12.2 zu seinem Zielort. Das Abholen der Palette durch das zweite FTF 10.2 ist durch eine vertikal, also in Y-Richtung verlaufende gestrichelte Linie angedeutet, welche von der zweiten Fahrtrichtung 12.2 abzweigt.

Bei der vorstehend beschriebenen Betriebsweise führen die Senkrechtförderer 4 Doppelspiele aus, werden also effizient betrieben. Die FTF 10.1, 10.2 müssen an den Übergabestationen 1, 2 nicht warten. Ferner kommt es nicht zu einem Gegenverkehr zweier FTF 10.1, 10.2, weil diese entlang der Regalfront in dieselbe Richtung 12.1, 12.2 unterwegs sind, und jeweils zuerst eine Palette auf einer der ersten Übergabestationen 1 abstellen und anschliessend eine Palette von einer der stromabwärts gelegenen zweiten Übergabestationen 2 aufnehmen. Hierbei bezieht sich eine Aussage über "dieselbe Richtung" der FTF 10.1, 10.2 auf diejenige Richtung, welche entlang der x-Richtung verläuft. Kurze Abschnitte in Y-richtung, um eine Palette aufzunehmen oder abzustellen, sind damit nicht gemeint. Ferner sind auch die Einfahrten des FTF in die sich in y-Richtung erstreckenden Buchten, welche zwischen den Übergabestationen 1, 2 gebildet werden, nicht gemeint.

Bei der in Figur 5 dargestellten Ausführungsform werden die Shuttles 9.1, 9.2, welche zwischen den Übergabeplätzen 3, 5 und Übergabestationen 1, 2 pendeln, durch die Quer-Verfahr-Wagen 14 ersetzt.

Bei der in Figur 6 dargestellten Ausführungsform greifen die Ein- und Auslager-Ebene 7 und die Lagervorzone 11 ineinander. Das FTF 10 fährt zur Abstellen und Aufnehmen einer Palette in die Buchten, welche sich zwischen den Übergabestationen 1, 2 bilden und in y-Richtung erstrecken, ein. Bei der Variante nach Figur 6 können entlang der Regalfront, d.h. entlang der x-Richtung, mehr Übergabestationen 1, 2 angeordnet werden, als bei Varianten gemäss den Figuren 1 bis 5.

In den Figuren 1 bis 6 sind jeweils verschiedene Details von Ausführungsformen des erfindungsgemässen Shuttle-Systems und des erfindungsgemässen Verfahrens dargestellt, welche vorstehend nur in Grundzügen angedeutet wurde. Diese Details werden nachstehend erläutert.

Alle in den Figuren 1 bis 6 ausschnittsweise dargestellten Ein- und Auslager-Ebenen 7 sind Teil eines (jeweils nicht dargestellten) Regalbaus. Unabhängig von der genauen Anzahl und Lage der einzelnen Lagerplätze 8.1, 8.2, 8.3 können alle Regalbauten als in der Draufsicht bzw. im Grundriss im Wesentlichen rechteckig beschrieben werden. Dies gilt explizit auch für die Anordnung nach den Figuren 2 und 6, welche von einem idealen Rechteck durchaus abweichen.

Dennoch handelt es sich auch bei der Darstellung nach Figur 2 um eine im Wesentlichen rechteckige Ein- und Auslager-Ebene: Einerseits erlauben die raster-artig angeordneten Lagerplätze 8.1, 8.2, 8.3 und die dazwischenliegenden Fahrwege 6 dieselben Shuttle-Fahrten wie die Ein- und Auslager-Ebenen der Figuren 1, 3 und 4. Weiterhin erlaubt die (nicht mit Bezugsziffern versehene) Regalfront an der Grenze zur Lagervorzone 11 eine Entlangfahrt des FTF 10. Die in Figur 2 dargestellten Abweichungen von einem idealen Rechteck sind also, insbesondere was die Funktionsweise des Shuttle-Systems angeht, nicht gravierend.

Analoges gilt für die Variante gemäss Figur 6: Für die Lagerplätze 8.1, 8.2 und die Fahrwege 6 etc. gilt dasselbe wie für Figur 2. Ferner ähnelt die Struktur an der Grenze zwischen Lagervorzone 11 und Ein- und Auslager-Ebene 7 den Ausstülpungen und Einbuchtungen biologischer Membranen, welche letztlich zu einer Oberflächenvergrösserung führen. In der Variante nach Figur 6 bewirkt diese Anordnung, dass entlang der in x-Richtung verlaufenden Regalfront mehr Übergabestationen 1, 2 angeordnet sind, als dies ohne die Sägezahn-artige Struktur gemäss Figur 6 der Fall wäre.

Die Figuren 1 bis 6 zeigen, wie bereits erwähnt, nur einen Ausschnitt eines Regalbau-Grundrisses. Ein Regalbau kann deutlich mehr als zwei Senkrechtförderer 4 und entsprechend mehr Lagerplätze 8, Fahrwege 6 etc. umfassen. Die Funktionsweise lässt sich jedoch an den gezeigten Ausschnitten gut erklären.

In den Figuren 1 bis 4 sind jeweils zwei mögliche Fahrtrichtungen 12.1, 12.2 angedeutet. In Figur 3 und 4 zeigen die entsprechenden Pfeile für die Fahrtrichtungen 12.1, 12.1 die gesamten Fahrtverläufe der FTF 10, inklusive den Anfahrten der Übergabestationen 1, 2. Diese in den Figuren in y-Richtung verlaufenden Ab- und Anfahrten von und zu den Übergabestationen 1, 2 sind in den Figuren 1 und 2 nicht dargestellt.

In den Figuren 5 und 6 sind keine bzw. nur eine Fahrtrichtung 12 dargestellt.

Die Fahrtrichtungen 12, 12.1, 12.2 zeigen hierbei nur exemplarische Fahrwege der FTF 10, 10.1, 10.2 zu einzelnen Übergabestationen 1, 2 an. Es könnten jeweils auch andere Übergabestationen 1, 2 angefahren werden, sofern zuerst eine erste Übergabestation 1 und danach eine stromabwärts liegende zweite Übergabestation 2 angefahren wird.

Wie in den Figuren 1 bis 4 dargestellt, fahren die FTF 10.1, 10.2 bevorzugt an derselben Stelle in die Lagervorzone 11 ein. An dieser Stelle kann eine (hier nicht dargestellte) Konturenkontroll-Einrichtung installiert sein, welche sicherstellt, dass das FTF 10.1, 10.2 seine Palette fehlerfrei auf einer ersten Übergabestation 1 abstellen kann, und dass diese Palette anschliessend fehlerfrei eingelagert werden kann.

Wie in den Figuren 1, 3, 4 und 6 dargestellt, kann daran gedacht sein, dass das FTF 10, 10.1, 10.2 nach der Einfahrt in die Lagervorzone 11 unmittelbar an die Regalfront heranfährt und seine Fahrt anschliessend entlang der Regalfront, d.h. in X-Richtung, fortsetzt. Alternativ kann beispielsweise daran gedacht sein, dass das FTF 10, 10.1, 10.2 an dem Punkt an die Regalfront heranfährt, an welchem sich diejenige erste Übergabestation 1 befindet, an welcher das betreffende FTF 10.1, 10.2 die aufgeladene Palette abstellen soll. In Figur 2 könnte das (in Figur 2 nicht dargestellte) FTF 10.1, welches der Fahrtrichtung 12.1 folgt, auf der "dritten" ersten Übergabestation 1 von links eine Palette abstellen. Das (ebenfalls nicht gezeigte) FTF 10.2, welches der Fahrtrichtung 12.2 folgt, könnte eine Palette auf der "siebten" ersten Übergabestation 1 von rechts abstellen. Vergleicht man die Fahrtrichtungen 12.1, 12.2 der Figuren 1 und 2, so liegt in Figur 1 eine einspurige Einbahnstrasse und in Figur 2 eine zumindest zweispurige Einbahnstrasse vor. Ein Vorteil der Varianten nach Figur 2 kann darin bestehen, dass die FTF 10.1, 10.2 sich auch dann nicht gegenseitig blockieren, wenn sie in kurzen Abständen hintereinander herfahren, und das vorderer FTF 10.1 vor einer Übergabestation 1, 2 anhält. Ein Vorteil der Anordnung nach Figur 1 kann darin bestehen, dass die Lagervorzone 11 sehr wenig Platz benötigt, ihre Ausdehnung in y-Richtung also stark verkleinert werden könnte.

Während gemäss den Figuren 1, 2 und 4 angedacht ist, dass die FTF 10.1, 10.2 jeweils randseitig, in den vorgenannten Figuren links, an die Regalfront heranfahren, so ist der Punkt bzw. Abschnitt, an welchem sich die FTF 10.1, 10.2 in Figur 3 der Regalfront nähern, eher mittig angeordnet.

In sämtlichen Ausführungsbeispielen können hintereinander in die Lagervorzone 11 einfahrende FTF 10.1, 10.2 entweder der Fahrtrichtung 12.1 oder der Fahrtrichtung 12.2 folgen. Hierbei kommt es in keinem der Fälle zu einer Situation mit Gegenverkehr; d.h. an keinem Punkt oder Abschnitt entlang der Regalfront besteht die Möglichkeit, dass sich zwei FTF 10.1, 10.2 entgegenkommen. Die Fahrtrichtung, entweder nach links oder nach rechts, ist stets festgelegt, sobald das FTF 10.1, 10.2 sich entlang der Regalfront, d.h. in X-Richtung bewegt.

Vorzugsweise sind die Übergabeplätze 3, 5 nur lagerseitig für die Shuttles 9.1, 9.2 zugänglich, während die Übergabestationen 1, 2 sowohl für die Shuttles 9.1, 9.2, als auch für die FTF 10, 10.1, 10.2 zugänglich sind. Paletten, welche von dem FTF 10, 10.1, 10.2 angeliefert wurden, können auf den ersten Übergabestationen 1 zwischengelagert werden, bis der erste Übergabeplatz 3 des Senkrechtförderers 5 frei ist, und ein Shuttle 9, 9.1, 9.2 die Palette von der ersten Übergabestation 1 zu dem ersten Übergabeplatz 3 transportieren kann. Umgekehrt können Paletten, welche nicht unmittelbar von einem FTF 10.1, 10.2 aufgenommen werden können, auf einer der zweiten Übergabestationen 2 zwischengelagert werden, um den zweiten Übergabeplatz 5 nicht zu blockieren. Durch die gewählte Anordnung mit jeweils genau zwei Übergabeplätzen 3, 5 seitlich der Senkrechtförderer 4 und jeweils zumindest zwei ersten und zumindest zwei zweiten Übergabestationen 1, 2 wird also gewährleistet, dass der Senkrechtförderer 4 unabhängig von den FTF 10, 10.1, 10.2 möglichst effizient betrieben werden kann und hierbei möglichst Doppelspiele ausführt.

Vorzugsweise sind die ersten und zweiten Übergabestationen 1, 2 baugleich. Daher kann im Bedarfsfall abhängig von einer Auftragslast festgelegt werden, ob jedem Senkrechtförderer 4 gleich viele erste und zweite Übergabestationen 1, 2 zugeordnet sind, oder ob beispielsweise mehr zweite Übergabestationen 2 vorhanden sind, weil in einem bestimmten Zeitraum sehr viele Paletten ausgelagert werden sollen. Der letztgenannte Fall ist in Figur 4 dargestellt, wo im Gegensatz zu den Figuren 1 bis 3 mehr zweite Übergabestationen 2 vorhanden sind. Benachbarte Senkrechtförderer 4, denen jeweils eine bestimmte Anzahl an Übergabestationen 1, 2 zugeordnet sind, können sich also auch eine oder mehrere Übergabestationen 1, 2 teilen. Allerdings kann das Shuttle-System so betrieben werden, dass jedem Senkrechtförderer 4 in der Regel zu jedem Zeitpunkt zumindest eine erste Übergabestation 1 und eine zweite Übergabestation 2 zugeordnet ist.

Es kann daran gedacht sein, die Senkrechtförderer 4 und die zugehörigen Übergabeplätze 3, 5 lagerseitig unmittelbar an der Regalfront zu platzieren, wie dies in den Figuren 1, 2 und 4 gezeigt ist. Alternativ kann auch daran gedacht sein, die Senkrechtförderer 4 und die zugehörigen Übergabeplätze 3, 5 ein Stück weit in Y-Richtung zu versetzen, so dass diese nicht mehr unmittelbar an die Regalfront angrenzen. Wie in Figur 3 dargestellt, können im letztgenannten Fall sämtliche Plätze entlang der Regalfront als Übergabestationen 1, 2 ausgeführt sein. Bei dieser in Figur 3 gezeigten Anordnung besteht der Vorteil, dass mehr Übergabestationen 1, 2 zur Verfügung stehen, was die Flexibilität und den Durchsatz erhöhen kann. Ein Vorteil der Anordnung gemäss den Figuren 1, 2 und 4 mit einem unmittelbar an der Regalfront befindlichen Senkrechtförderer besteht im leichten Zugang des Senkrechtförderers 4 für Wartungs- und Reparaturarbeiten.

Sind die Shuttles 9.1, 9.2 für den Transfer der Ladungsträger zwischen den Übergabestationen 1, 2 und den Übergabeplätzen 3, 5 zuständig, so müssen diese Shuttles 9.1, 9.2 bei den Ausführungsbeispielen gemäss den Figuren 1 bis 6 maximal zwei Richtungswechsel durchführen, während sie einen Ladungsträger von einer Übergabestation 1, 2 zu einem Übergabeplatz 3, 5 oder umgekehrt befördern. Hierbei meint ein Richtungswechsel, dass die Fahrt zunächst parallel zur x-Richtung und anschliessend parallel zur y-Richtung erfolgt oder umgekehrt, wobei es unerheblich ist, ob die Fahrt in positiver oder negativer x-Richtung (in den Figuren nach rechts oder links) erfolgt. Hierbei ist auch zu beachten, ob die Shuttles 9, 9.1, 9.2 in die Übergabeplätze 3, 5 und in die Übergabestationen 1, 2 einfahren, was in der Regel der Fall ist. Massgeblich für das Vorliegen eines Richtungswechsels ist, ob ein Richtungswechsel von (in Bezug auf die Figuren) horizontal, also parallel zur x-Richtung, nach vertikal, also parallel zur y-Richtung, oder umgekehrt erfolgt.

In den Figuren 1, 2 und 4 führen die Shuttles 9.1, 9.2 beim Transfer eines Ladungsträgers zwischen den Übergabestationen 1, 2 und den Übergabeplätzen 3, 5 zwei solcher Richtungswechsel aus, bei der Variante nach Figur 3 kann es abhängig von der anzusteuernden Übergabestation 1, 2 auch zu Fällen kommen, bei denen kein Richtungswechsel nötig ist. Auch bei der Variante nach Figur 3 können, je nach der anzusteuernden Übergabestation 1, 2, zwei Richtungswechsel nötig sein.

Im Ausführungsbeispiel gemäss Figur 5 übernehmen die Quer-Verfahr-Wagen 14 den Transfer der Ladungsträger zwischen den Übergabestationen 1, 2 und den Übergabeplätzen 3, 5. Die Quer-Verfahr-Wagen 14 können also die vorbeschriebenen Shuttles 9.1, 9.2 ersetzen. Innerhalb der Ein- und Auslager-Ebene 7 ist dennoch auch in der Variante nach Figur 5 zumindest ein Shuttle 9 vorhanden, um die dortigen Lagerplätze 8.1, 8.2 zu bedienen. Ein solches Shuttle kann einen in der Ein- und Auslager-Ebene 7 einzulagernden Ladungsträger unmittelbar von einer ersten Übergabestation 1 abholen oder von dem Quer-Verfahr-Wagen 14 übernehmen, welcher den Ladungsträger wiederum zuvor von einer ersten Übergabestation 1 abgeholt hat.

Die Quer-Verfahr-Wagen 14 sind auf der Schiene 13 parallel zur Regalfront, also entlang der x-Richtung, verfahrbar. Vorzugsweise umfassen sie eine Teleskopgabel (nicht dargestellt), welche quer zur Regalfront, also in y-Richtung, ausfahrbar ist. Alternativ oder zusätzlich können die Quer-Verfahr-Wagen 14 einen Kettenförderer oder dergleichen umfassen. Mit der Teleskopgabel können die Quer-Verfahr-Wagen 14 einen einzulagernden Ladungsträger von einer ersten Übergabestation 1 aufnehmen und an einen Senkrechtförderer 4 oder an ein Shuttle 9 übergeben. Umgekehrt können die Quer-Verfahr-Wagen 14 mit der Teleskopgabel einen auszulagernden Ladungsträger von dem Senkrechtförderer 4 oder einem Shuttle 9 übernehmen und auf einer zweiten Übergabestation 2 abstellen.

### Obwohl nur einige bevorzugte Ausführungsbeispiele der Erfindung beschrieben und dargestellt wurden, ist es offensichtlich, dass der Fachmann zahlreiche Modifikationen hinzufügen kann, ohne Wesen und Umfang der Erfindung zu verlassen. Insbesondere kann an folgende Modifikationen gedacht sein:

Die dargestellten Senkrechtförderer 4 sind unmittelbar an der Regalfront oder zumindest nahe der Regalfront angeordnet und werden von zumindest einem oder mehreren Shuttles 9.1, 9.2 bedient, welches bzw. welches Paletten auf dem ersten Übergabeplatz 3 abstellt oder von dem zweiten Übergabeplatz 5 aufnimmt. Das Shuttle-System kann weitere Senkrechtförderer, beispielsweise für die Shuttles 9 umfassen, denen keine Übergabestationen 1, 2 zugeordnet sind. Vorzugsweise sind aber denjenigen Senkrechtförderern 4, welche unmittelbar oder zumindest nahe der Regalfront angeordnet sind, jeweils mehrere Übergabestationen 1, 2 zugeordnet.

Es kann beispielsweise auch an Ausführungsformen gedacht sein, in welchen im Regalbau gegenüber der mit Übergabestationen 1, 2 bestückten Regalfront weitere Senkrechtförderer für die Paletten vorgesehen sind, die beispielsweise ein Umlagern von Paletten zwischen den Ebenen des Regalbaus ermöglichen. Solchen Senkrechtförderern müssen keine Übergabestationen 1, 2 zugeordnet sein.

Wie einem Vergleich der Figur 3 mit den Figuren 1, 2 und 4 zu entnehmen ist, sind die ersten Übergabestationen 1 und die ersten Übergabeplätze 3 in Fahrtrichtung 12.1, 12.2 auch dann vor dem jeweiligen Senkrechtförderer 4 angeordnet, wenn dieser weiter innen im Regalbau angeordnet ist. Entsprechendes gilt für die zweiten Übergabestationen 2 und zweiten Übergabeplätze 5, die in Fahrtrichtung 12.1, 12.2 nach dem jeweiligen Senkrechtförderer 4 angeordnet sind.

Dies gilt, obwohl in X-Richtung jeweils auf der Höhe des Senkrechtförderers 4 eine zweite Übergabestation 2 angeordnet ist. In Bezug auf die Übergabestationen 1, 2 gilt die obige Aussage also für alle, oder für alle bis auf eine Übergabestation 1, 2 je Senkrechtförderer 4.

Die einzulagernden Paletten werden also unabhängig davon, ob der Senkrechtförderer 4 unmittelbar an der Regalfront angeordnet ist, stets in Bezug auf die Fahrtrichtung 12.1, 12.2 vor dem jeweiligen Senkrechtförderer 4 abgestellt, mit welchem diese Palette in eine Lagerebene transportiert werden soll. Entsprechend wird eine vom Senkrechtförderer 4 aus einer Lagerebene in die Ein- und Auslager-Ebene 7 beförderte Palette auf einer der zweiten Übergabestationen 2 abgestellt, welche sich in X-richtung nach dem Senkrechtförderer 4, also stromabwärts befindet.

Ähnliche Überlegungen können für die Variante gemäss Figur 6 gelten.

Die Fahrtrichtungen 12, 12.1, 12.2 zeigen nur exemplarische Fahrwege von FTF 10, 10.1, 10.2 an.

Von diesen Beispielen können FTF 10.1, 10.2 insofern abweichen, als das durch senkrechte Striche in den Figuren 3, 4 und 6 angedeutete Ein- und Auslagern an beliebigen Übergabestationen 1, 2 entlang der Regalfront erfolgen kann, wobei jedoch vorzugsweise zunächst die Übergabe eines Ladungsträgers an eine erste Übergabestation 1 und anschliessend die Übernahme eines Ladungsträgers von einer zweiten Übergabestation 2 erfolgt. Die zweite Übergabestation 2 liegt in Fahrtrichtung 12.1, 12.2 also stromabwärts der ersten Übergabestation 1. Solange die vorgenannte Voraussetzung erfüllt ist, sind Abweichungen von den gezeigten Fahrtrichtungen 12, 12.1, 12.2 denkbar. In allen Fällen fahren die FTF 10, 10.1, 10.2 jedoch vorzugsweise über weite Abschnitte hinweg parallel zu der Regalfront, in den Figuren also in x-Richtung nach links oder rechts. Eine Fahrt entlang der y-Richtung erfolgt vorzugsweise nur, um in einer "mehrspurigen" Lagervorzone 11 die Spur zu wechseln, sowie für die Übernahme und Übergabe eines Ladungsträgers. In der Variante nach Figur 6 fährt das FTF 10 in y-Richtung in Bucht- bzw. Sacklock-artig sich erstreckende Einstülpung, welche durch die Anordnung der Übergabestationen 1, 2 gebildet ist.

In seltenen fällen sind auch diagonale Fahrten der FTF 10.1, 10.2 denkbar, welche nicht parallel entweder zur Y-Richtung oder zur X-Richtung verlaufen.

Den Senkrechtförderern 4 in den Figuren 1, 2 und 4 sind jeweils sechs Übergabestationen 1, 2 zugeordnet. Während den Senkrechtförderern 4 in den Figuren 1 und 2 jeweils drei erste und drei zweite Übergabestationen 1, 2 zugeordnet sind, sind dem Senkrechtförderer 4 in Figur 4 zwei erste und vier zweite Übergabestationen 1, 2 zugeordnet. Es kann daran gedacht sein, den Senkrechtförderern 4 mehr oder weniger Übergabestationen 1, 2 zuzuordnen. Werden jede Senkrechtförderer 4 nur zwei Übergabestationen 1, 2 zugeordnet, so wird die erste Übergabestation 1 üblicherweise zu jedem Zeitpunkt als erste Übergabestation 1, und somit zur Übernahme einer Palette betrieben. Entsprechendes gilt für die zweite Übergabestation 2. Sind jedoch jedem Senkrechtförderer 4 zumindest drei Übergabestationen 1, 2 zugeordnet, so kann abhängig von einer Auftragslast für zumindest eine der drei Übergabestationen 1, 2 festgelegt werden, ob sie als erste Übergabestation 1 betrieben wird und somit für das Einlagern einer Palette im Regalbau zuständig ist, oder ob sie als zweite Übergabestation 2 betrieben wird, und somit für das Auslagern einer Palette aus dem Regalbau zuständig ist.

Wenn jedem Senkrechtförderer 4 zumindest drei Übergabestationen 1, 2 zugeordnet sind, ist also eine dynamische Vergabe der Betriebsweise der Übergabestation 1, 2 als erste oder zweite Übergabestation 1, 2 möglich.

Anstelle der Paletten können beliebige andere Ladungsträger gehandhabt werden.

Anstelle der FTF 10.1, 10.2, kann an andere Flurförderzeuge gedacht sein.

Die Regalfront kann anders ausgestaltet sein, als in den Figuren 1 bis 6 gezeigt. Vorzugsweise fahren jedoch die FTF 10, 10.1, 10.2 im Wesentlichen parallel zur und vorzugsweise auch entlang der Regalfront, in den Figuren also im Wesentlichen entlang der X-Richtung und hierbei vorzugsweise nahe an der Regalfront entlang. Weiter vorzugsweise stellen die FTF 10.1, 10.2 ausserdem stets zunächst eine Palette auf einer ersten Übergabestation 1 ab, von welcher aus diese Palette durch ein Shuttle 9, vorzugsweise durch ein erstes Shuttle 9.1, zu einem in Fahrtrichtung 12, 12.1, 12.2 auf gleicher Höhe oder stromabwärts liegenden ersten Übergabeplatz 3 transportiert wird. Anschliessend nimmt das FTF 10, 10.1, 10.2 eine Palette von einer stromabwärts der ersten Übergabestation 1 befindlichen zweiten Übergabestation 2 auf, wobei diese Palette zuvor von dem Shuttle 9, vorzugsweise von dem zweiten Shuttle 9.2, an einem zweiten Übergabeplatz 5 eines auf gleicher Höhe oder stromaufwärts der zweiten Übergabestation 2 befindlichen Senkrechtförderer 4 aufgenommen und zu der zweiten Übergabestation 2 transportiert wurde. Bei allen denkbaren Variationen ist angedacht, dass die Regalfront und die vorzugsweise im Wesentlichen parallel zu der Regalfront verlaufenden Fahrtrichtung 12.1, 12.1 den Massstab für die Zuordnung der "ersten" und "zweiten" Übergabestationen 1, 2 "vor" und "nach" den jeweiligen Senkrechtförderern 4.

Vorzugsweise sind die Shuttles 9, 9.1, 9.2 als bidirektionale Shuttles 9 ausgeführt, welche auf den Fahrwegen 6 in x- und y-Richtung fahren können, und an Kreuzungen der Fahrwege 6 einen Wechsel ihrer Fahrtrichtung um 90° bewerkstelligen können. Alternative Shuttles sind denkbar.

Wie aus den Figuren 1, 3 und 4 hervorgeht, kann in der Lagervorzone 11 im Wesentlichen ein einspuriger Einbahnstrassenbetrieb herrschen, bei welchem Fahrtrichtungen 12.1, 12.2 der FTF im Wesentlichen zusammenfallen, wie dies in den Figuren 1 und 4 gezeigt ist. Alternativ können die Fahrtrichtungen 12.1, 12.2 der FTF 10.1, 10.2 sich zumindest auf derselben Höhe in Y-Richtung befinden, was in Figur 3 erkennbar ist. Weiter alternativ kann ein mehrspuriger Einbahnstrassenbetrieb herrschen, bei welchem zwei oder mehr FTF 10.1, 10.2 im Wesentlichen parallel zueinander und parallel zur Regalfront in Fahrtrichtung 12.1, 12.2 sich bewegen können, was aus Figur 2 ansatzweise hervorgeht.

Sämtliche Merkmale und Details, welche in einer der Figuren 1 bis 46gezeigt sind, können mit den übrigen Merkmalen und Details der jeweils anderen Figuren kombiniert werden.

Nach Verlassen der Lagervorzone 11, in den Figuren 1 bis 4 und 6 also nach rechts - und in Figur 3 alternativ nach links - kann sich ein Zielort anschliessen, an welchem die FTF 10.1, 10.2 die an der zweiten Übergabestation 2 aufgenommene Palette abgeben. Hierbei kann es sich beispielsweise um eine Kommissionierstation, einen LKW-Frachtraum, eine Produktionsanlage oder dergleichen handeln.

Wie in Figur 3 gezeigt, kann die Regalfront in Abschnitte unterteilt werden, wobei die FTF 10.1, 10.2 in jedem Abschnitt entlang der Regalfront, d.h. in X-Richtung, in dieselbe Richtung fahren, wobei sich aber die Fahrtrichtung der FTF 10.1, 10.2 zwischen den jeweiligen Abschnitten unterscheidet. Im linken Abschnitt der Figur 3 fahren die FTF 10.1, 10.2 nach links, im rechten Abschnitt nach rechts. Um keinen Gegenverkehr zu erzeugen, sind vorzugsweise maximal zwei solcher Abschnitte vorhanden. Sind mehr Abschnitt vorhanden, so müsste ein Gegenverkehr in Kauf genommen oder dadurch vermieden werden, dass nicht alle FTF 10.1, 10.2 direkt an der Regalfront entlangfahren, sondern beispielsweise in y-richtung versetzt, in den Figuren also nach "unten" versetzt, verkehren.

Es kann auch vorgesehen sein, bestimmte Paletten nicht in einer der (nicht gezeigten) Lagerebenen, sondern direkt in der Ein- und Auslager-Ebene 7 einzulagern oder von dort auszulagern. Ein Einlagern in der Ein- und Auslager-Ebene erfolgt beispielsweise, indem ein FTF 10, 10.1, 10.2 eine Palette auf einer ersten Übergabestation 1 abstellt, und diese anschliessend von einem Shuttle 9 zu einem Lagerplatz in der Ein- und Auslager-Ebene 7 transportiert wird. Ein Auslagern erfolgt, indem ein Shuttle 9 eine Palette von einem Lagerplatz in der Ein- und Auslager-Ebene 7 aufnimmt und zu einer zweiten Übergabestation 2 transportiert und dort abstellt. Bei dem Shuttle 9, welches die vorgenannten Aktionen ausführt, handelt es sich vorzugsweise nicht um das erste und zweite Shuttle 9.1, 9.2, da diese speziell und vorzugsweise ausschliesslich für den Transport von Paletten von den Übergabestationen 1, 2 zu den Übergabeplätzen 3, 5 der Senkrechtförderer 4 zuständig sind.

Es kann vorkommen, dass ein FTF 10, 10.1, 10.2 leer, d.h. nicht mit einer Palette beladen, in die Lagervorzone 11 einfährt oder im Allgemeinen an die Regalfront heranfährt. In einem solchen Fall dient das FTF 10.1, 10.2 ausschliesslich dem Auslagern einer Palette, welche es von einer zweiten Übergabestation 2 abholt und zu einem Zielort transportiert.

Bei einem Transfer der Ladungsträger zwischen den Übergabestationen 1, 2 und den Übergabeplätzen 3, 5 kommt es bei sämtlichen Ausführungsformen vorzugsweise zu maximal zwei Richtungswechseln.

Aus beispielsweise baulichen Gründen kann es vorkommen, dass zumindest einem der Senkrechtförderer 4 weniger Übergabestationen 1, 2 zugeordnet sind.

Die Quer-Verfahr-Wagen 14 können statt einer Teleskopgabel auch ein anderes Lastaufnahmemittel umfassen.

Obwohl dies in den Figuren 5 und 6 nicht gezeigt ist, können dort ähnlich den Varianten gemäss den Figuren 1 bis 4 auch mehrere FTF 10.1, 10.2 entlang entsprechender Fahrtrichtungen 12.1, 12.2 verkehren. Für sämtliche Figuren gilt, dass stets eine Vielzahl von FTF 10, 10.1, 10.2, also insbesondere mehr als zwei, entlang der Regalfront verkehren können.

In sämtlichen Ausführungsbeispielen können eine Lage, eine Anordnung und eine Anzahl etwaiger Fahrwege 6 verändert werden. Hierbei ist zu beachten, dass unbeladene Shuttles 9, 9.1, 9.2 in der Regel auch die Lagerplätze 8, 8.1, 8.2, 8.3 sowie die von ihnen gebildeten Lagerkanäle als Fahrwege nutzen können. Beladene Shuttles dies in der Regel zumindest dann, wenn die entsprechenden Lagerplätze nicht durch einen Ladungsträger belegt sind.

Abhängig von der Konfiguration des Regalbaus kann in der Variante nach Figur 6 angedacht sein, dass ein in die buchtartigen Ausformungen einfahrendes FTF 10 sich vor dem Einfahren um 90° dreht. Dies kann nötig sein, damit das FTF anschliessend so orientiert ist, dass eine Übergabe des Ladungsträgers auf die erste Übergabestation 1 möglich ist.

Für sämtliche Ausführungsvarianten gilt, dass die (nicht dargestellten) Ladungsträger vorzugsweise rechteckig oder quadratisch ausgebildet sind. Bei rechteckigen Ladungsträger kann es abhängig von sämtlichen Komponenten des Shuttle-Systems, d.h. von den Übergabeplätzen 3, 5 und Übergabestationen 1, 2, von den Shuttles, 9, 9.1, 9.2 sowie von den FTF 10, 10.1, 10.2 sowie von den Fahr- und Abstell-Schienen verschiedene Anordnungen im Hinblick auf die x- und y-Richtung geben. Dies kann relevant sein für die Frage, ob eine Übergabe eines Ladungsträgers von einer der Komponenten des Shuttle-Systems an eine andere Komponente in x- oder y-Richtung erfolgt. Sämtliche Ausführungsformen sollen hierbei jeweils auch eine in Bezug auf die x- und y-Richtungen um 90° gedrehte Anordnung der vorgenannten Komponenten umfassen.

Trotz der Sägezahn-artigen Konfiguration sind die Übergabestationen 1, 2 in Figur 6 "entlang" der Längsrichtung der Regalfront, d.h. "entlang" der x-Richtung angeordnet.

Es kann daran gedacht sein, im Bedarfsfall abhängig von der Auftragslast festzulegen, ob die Übergabeplätze 3, 5 zum Ein- oder Auslagern benutzt werden. Dies wurde in Bezug auf die Übergabestationen 1, 2 schon beschrieben. Die von der Auftragslast abhängige Festlegung, ob die

Übergabeplätze 3, 5 als erster Übergabeplatz 3 oder zweiter Übergabeplatz 5 genutzt werden, kann alternativ oder zusätzlich zu entsprechenden Auftragslast-abhängigen Festlegungen der Übergabestationen 1, 2 erfolgen.

### Bezugszeichenliste

| | | | | | |
|---|---|---|---|---|---|
| 1 | Erste Übergabestation | | | | |
| 2 | Zweite Übergabestation | | | | |
| 3 | Erster Übergabeplatz | | | | |
| 4 | Senkrechtförderer | | | | |
| 5 | Zweiter Übergabeplatz | | | | |
| 6 | Fahrwege für Shuttles | | | | |
| 7 | Ein- und Auslager-Ebene | | | | |
| 8 | Lagerplatz | | | | |
| 9 | Shuttle | | | | |
| 10 | FTF | | | | |
| 11 | Lagervorzone | | | | |
| 12 | FTF-Fahrtrichtung | | | | |
| 13 | Schienen | | | | |
| 14 | Quer-Verfahr-Wagen | | | | |
| 15 | | | | | |
| 16 | | | | | |
| 17 | | | | | |
| 18 | | | | | |
| 19 | | | | | |
| 20 | | | | | |
| 21 | | | | | |
| 22 | | | | | |
| 23 | | | | | |
| 24 | | | | | |
| 25 | | | | | |
| 26 | | | | | |
| 27 | | | | | |
| 28 | | | | | |
| 29 | | | | | |
| 30 | | | | | |
| 31 | | | | | |
| 32 | | | | | |
| 33 | | | | | |

## Patentansprüche

1. Shuttle-System umfassend einen Regalbau mit einer Ein- und Auslager-Ebene (7) und zumindest einer Lagerebene,
wobei das Shuttle-System zumindest ein in den Ebenen des Regalbaus verkehrendes Shuttle (9) umfasst,
wobei der Regalbau eine Regalfront umfasst,
wobei der Regalbau zumindest einen Senkrechtförderer (4) umfasst,
wobei der Regalbau entlang der Regalfront zumindest zwei Übergabestationen (1, 2) zum Ein- und Auslagern eines Ladungsträgers aus dem Regalbau umfasst,
wobei dem Senkrechtförderer (4) zumindest zwei Übergabestationen (1, 2) zugeordnet sind,
wobei die Übergabestationen (1, 2) eingerichtet sind, eine Übergabe eines Ladungsträgers von einem in der Ein- und Auslager-Ebene (7) verkehrenden Shuttle (9) oder von einem parallel zur Regalfront in der Ein- und Auslager-Ebene (7) verkehrenden Quer-Verfahr-Wagen (14) an ein entlang der Regalfront verkehrendes Flurförderzeug (10.1, 10.2) und umgekehrt zu erlauben,
wobei dem zumindest einen Senkrechtförderer (4) zumindest zwei Übergabeplätze (3, 5) zugeordnet sind,
wobei die Übergabeplätze (3, 5) eingerichtet sind, eine Übergabe eines Ladungsträgers von dem Senkrechtförderer (4) an ein in der Ein- und Auslager-Ebene verkehrendes Shuttle (9) und umgekehrt oder an den Quer-Verfahr-Wagen (14) und umgekehrt zu erlauben.

2. Shuttle-System nach Anspruch 1, wobei
dem zumindest einen Senkrechtförderer (4) zumindest zwei Übergabestationen (1, 2) derart zugeordnet sind, dass sich entlang der Regalfront vor und nach dem Senkrechtförderer (4) jeweils zumindest eine Übergabestation (1, 2) befindet, und/oder wobei
wobei dem zumindest einen Senkrechtförderer (4) zwei Übergabeplätze (3, 5) derart zugeordnet sind, dass sich entlang der Regalfront vor und nach dem Senkrechtförderer (4) jeweils zumindest ein Übergabeplatz (3, 5) befindet.

3. Shuttle-System nach einem der vorhergehenden Ansprüche, **dadurch gekennzeichnet, dass** jedem Senkrechtförderer (4) zumindest ein Shuttle (9) zugeordnet ist, welches eingerichtet ist, Ladungsträger von den Übergabestationen (1, 2) zu den Übergabeplätzen (3, 5) und zurück zu transportieren.

4. **Verfahren** zum Betreiben eines Shuttle-Systems gemäss zumindest einem der Ansprüche 1 bis 3, wobei das zumindest eine Shuttle (9) oder ein Quer-Verfahr-Wagen (14) einen einzulagernden Ladungsträger von einer Übergabestation (1) übernimmt und/oder einen auszulagernden Ladungsträger an eine Übergabestation (2) übergibt.

5. Verfahren nach Anspruch 4, wobei das Verfahren ein Einlagern und/oder ein Auslagern zumindest eines Ladungsträgers aus einer Lagerebene oder in eine Lagerebene mit folgenden Schritten umfasst:
- Zum Einlagern eines Ladungsträgers in eine Lagerebene wird der Ladungsträger auf einer ersten Übergabestation (1) abgestellt und anschliessend von einem Shuttle (9) oder einem Quer-Verfahr-Wagen (14) zu einem ersten dem Senkrechtförderer (4) zugeordneten Übergabeplatz (3) transportiert, woraufhin der Senkrechtförderer (5) den Ladungsträger übernimmt, und in die Lagerebene befördert
- Zum Auslagern eines in einer Lagerebene gelagerten Ladungsträgers wird der Ladungsträger von einem in der Lagerebene verkehrenden Shuttle (9) an den Senkrechtförderer (5) übergeben, woraufhin der Senkrechtförderer (5) den Ladungsträger in die Ein- und Auslager-Ebene befördert und auf einem zweiten Übergabeplatz (5) abstellt, wo ein Shuttle (9) oder ein Quer-Verfahr-Wagen (14) den Ladungsträger übernimmt und zu einer zweiten Übergabestation (2) transportiert.

6. Verfahren nach einem der Ansprüche 4 oder 5, wobei das Verfahren ein Einlagern und/oder ein Auslagern zumindest eines Ladungsträgers aus oder in die Ein- und Auslager-Ebene mit folgenden Schritten umfasst:
- Zum Einlagern eines Ladungsträgers in die Ein- und Auslager-Ebene wird der Ladungsträger auf einer ersten Übergabestation (1) abgestellt und anschliessend von einem Shuttle (9) zu einem Lagerplatz (8) transportiert
- Zum Auslagern eines in der Ein- und Auslager-Ebene gelagerten Ladungsträgers wird dieser an seinem Lagerplatz (8) von einem Shuttle (9) übernommen und zu einer zweiten Übergabestation (2) transportiert.

7. Verfahren nach einem der Ansprüche 4 oder 5, wobei das Verfahren ein Einlagern und/oder ein Auslagern zumindest eines Ladungsträgers aus der oder in die Ein- und Auslager-Ebene mit folgenden Schritten umfasst:
- Zum Einlagern eines Ladungsträgers in die Ein- und Auslager-Ebene wird der Ladungsträger auf einer ersten Übergabestation (1) abgestellt und anschliessend von einem Quer-Verfahr-Wagen (14) aufgenommen und an ein Shuttle (9) übergeben, welches den Ladungsträger zu einem Lagerplatz (8) transportiert
- Zum Auslagern eines in der Ein- und Auslager-Ebene gelagerten Ladungsträgers wird dieser an seinem Lagerplatz (8) von einem Shuttle (9) übernommen und an den Quer-Verfahr-Wagen (14) übergeben, welcher den Ladungsträger zu der zweiten Übergabestation (2) transportiert.

8. Verfahren nach zumindest Anspruch 5, wobei das Verfahren ein Einlagern und ein Auslagern von Ladungsträgern in eine Lagerebene und aus einer Lagerebene mit folgenden Schritten umfasst:
- Zum Einlagern des Ladungsträgers in der Lagerebene wird der Ladungsträger von einem Flurförderzeug (10.1) auf der ersten Übergabestation (1) abgestellt und anschliessend von einem ersten Shuttle (9) zu einem ersten Übergabeplatz (3) des Senkrechtförderers (4) transportiert, woraufhin der Senkrechtförderer (4) den Ladungsträger übernimmt, und in die Lagerebene befördert
- Zum Auslagern des in der Lagerebene gelagerten Ladungsträgers wird dieser von dem in der Lagerebene verkehrenden Shuttle (9) an den Senkrechtförderer (4) übergeben, woraufhin der Senkrechtförderer (4) den Ladungsträger in die Ein- und Auslager-Ebene befördert und auf dem zweiten Übergabeplatz (4) abstellt, wo das erste oder ein zweites Shuttle (9) den Ladungsträger übernimmt und zu der zweiten Übergabestation (2) transportiert,
wobei das Flurförderzeug (10.1) oder ein anderes Flurförderzeug (10.2) den auf der zweiten Übergabestation (2) abgestellten Ladungsträger übernimmt,
wobei eine Fahrtrichtung (12) des Flurförderzeugs (10.1, 10.2) entlang der Regalfront verläuft, und
wobei als zweite Übergabestation (2) eine Übergabestation (2) ausgewählt wird, welche sich in Bezug auf die Fahrtrichtung (12) stromabwärts der ersten Übergabestation (1) befindet.

9. Verfahren nach zumindest einem der Ansprüche 4 bis 8, **gekennzeichnet durch** eine Vorzugsrichtung, welche entlang der Regalfront dergestalt vorherrscht, dass entlang der Regalfront verkehrende Flurförderzeuge (10.1, 10.2) sich im Wesentlichen an jedem Punkt entlang der Regalfront nur in eine Richtung bewegen.

10. Verfahren nach zumindest einem der Ansprüche 4 bis 9, **dadurch gekennzeichnet, dass** eine zentrale Konturenkontrolle dergestalt erfolgt, dass mehrere Flurförderzeuge (10.1, 10.2) dieselbe Einrichtung zur Konturenkontrolle passieren.

11. Verfahren nach zumindest einem der Ansprüche 4 bis 10 zum Betreiben eines Shuttle-Systems, bei welchem jedem Senkrechtförderer (4) zumindest drei Übergabestationen (1, 2) zugeordnet sind, **dadurch gekennzeichnet, dass** abhängig von einer Auftragslast für zumindest eine der Übergabestationen (1, 2) festgelegt wird, ob sie für das Einlagern oder für das Auslagern von Ladungsträgern genutzt wird.

12. Verfahren nach zumindest einem der Ansprüche 4 bis 11, **dadurch gekennzeichnet, dass** eine Sequenzbildung für zumindest zwei Ladungsträger derart erfolgt, dass die Flurförderzeuge (10.1, 10.2), welche die Ladungsträger von den zweiten Übergabestationen übernehmen, die Sequenz bilden.

13. Verfahren nach zumindest einem der Ansprüche 5 bis 11, bei welchem mehrere erste und/oder mehrere zweite Übergabestationen zum Einsatz kommen, **dadurch gekennzeichnet, dass** das Shuttle (9) oder der Quer-Verfahr-Wagen (14) zum Einlagern aus mehreren Ladungsträgern, die auf mehreren ersten Übergabestationen bereitstehen, denjenigen zum Senkrechtförderer (4) transportiert, welcher den kürzesten Fahrweg (6) zum Senkrechtförderer (4) aufweist, und/oder dass das Shuttle (9) oder der Quer-Verfahr-Wagen (14) zum Auslagern einen auszulagernden Ladungsträger auf derjenigen zweite Übergabestation abstellt, welche aus einer Gruppe von mehreren zweiten Übergabestationen den kürzesten Fahrweg (6) zum Senkrechtförderer (4) aufweist.

14. Verfahren nach einem der Ansprüche 4 bis 13, **dadurch gekennzeichnet, dass** das Shuttle-System einen Materialflussrechner umfasst oder mit einem solchen Materialflussrechner in Wirkverbindung steht.
